# EUROPÄISCHE PATENTSCHRIFT

(11) **EP 3 086 251 B1**
(45) Veröffentlichungstag und Bekanntmachung des Hinweises auf die Patenterteilung: **26.02.2020**
(21) Anmeldenummer: 16169902.0
(22) Anmeldetag: 13.01.2014
(51) Int. Cl.: G06F 21/32, H04L 9/32

(54) **BENUTZER-IDENTIFIKATION**
USER IDENTIFICATION
IDENTIFICATION D'UTILISATEUR

(30) Priorität: 22.01.2013 DE 102013100635
(43) Veröffentlichungstag der Anmeldung: 26.10.2016
(62) Teilanmeldung aus: 14701683.6
(73) Patentinhaber: IDnow GmbH, 80469 München (DE)
(72) Erfinder: BAUER, Armin, 80803 München (DE)
(74) Vertreter: Stellbrink & Partner Patentanwälte mbB

(56) Entgegenhaltungen:
- DE-A1- 19 901 881
- GB-A- 2 501 362
- US-A1- 2012 106 805
- Anonymous: "ID check system for passport check & ID scanners | IDsmart", , 16. November 2012 (2012-11-16), XP055113456, Gefunden im Internet: URL:https://web.archive.org/web/2012111600 1247/http://idscan.co.uk/id-check-idsmart [gefunden am 2014-04-10]
- "Netverify Implementation Guide Contents", , 18. Dezember 2012 (2012-12-18), XP055113353, Gefunden im Internet: URL:http://jumio.com/wp-content/uploads/ne tverify_implementation/Netverify_Implement ation_Guide_v1_3_0.pdf [gefunden am 2014-04-10]
- "PRADOTEC and Intel Announce Intel Atom(TM) Processor-based Handheld ePassport Terminal", , 18. August 2011 (2011-08-18), XP055065794, Gefunden im Internet: URL:http://www.pradotec.com.my/webadmin/v2 /news_event_hpt6002011.html [gefunden am 2013-06-07]

## Beschreibung

Verschiedene Ausführungsformen betreffen ein Verfahren zum Identifizieren eines Benutzers und ein System zum Identifizieren eines Benutzers. Insbesondere betreffen verschiedene Ausführungsformen Techniken, welche das Identifizieren eines Benutzers mittels von einem Endgerät des Benutzers übertragenen ersten und zweiten Bilddaten auf einem Identifizierungs-Server ermöglichen.

Es sind Szenarien bekannt, bei denen das Identifizieren eines Benutzers erstrebenswert ist. Identifizieren eines Benutzers kann hierbei bedeuten: Überprüfen oder Bereitstellen der Identität des Benutzers bzw. Überprüfen oder Bereitstellen eines oder mehrerer Identitäts-Kriterien des Benutzers. Solche Identitäts-Kriterien können in verschiedenen Szenarien etwa ein Alter des Benutzers, ein Wohnort des Benutzers, und/oder ein Name des Benutzers sein.

Solche Szenarien können z.B. insbesondere identitäts-kritische Transaktionen, wie Kaufverträge oder Banküberweisungen oder Zugangskontrollen sein, bei denen etwa aufgrund von gesetzlicher Regularien oder persönlicher Interessen sichergestellt werden soll, dass die Identität des Transaktionspartners feststeht und / oder die Identitäts-Kriterien bestimmte Voraussetzungen erfüllen - etwa Volljährigkeit oder einen Wohnort in einem bestimmten Land usf. Dies bedeutet, dass in Abhängigkeit des Identifizierens ein Authentifizieren des Benutzers erfolgen kann.

Jedoch kann es auch bei weiteren, nicht oder nicht besonders identitäts-kritischen Szenarien erstrebenswert sein, einfache und schnelle Techniken zur Identifizierung des Benutzers bereitzustellen.

Typischerweise können solche Szenarien ein vergleichsweise hohes Maß an Zuverlässigkeit und/oder Fälschungssicherheit und/oder Täuschungssicherheit in der Identifizierung erfordern. Es kann z.B. erstrebenswert sein, das Identifizieren des Benutzers gegenüber Fälschungen von Identifizierungs-Dokumenten und/oder mutwilligen Täuschungen sicher zu gestalten.

Es sind diesbezüglich Identifizierungs-Techniken bekannt, welche darauf beruhen, dass ein Benutzer bei einer autorisierten Stelle persönlich vorstellig wird. Dort kann dann ein Identifizierungs-Dokument mit Lichtbild des Benutzers zur Identifizierung verwendet werden.

Verschiedene Typen von Identifizierungs-Dokumente sind bekannt, etwa: Pass, Personalausweis, und/oder Führerschein.

Weitere vorbekannte Identifizierungs-Verfahren beruhen auf der Identifizierung mittels Datenbanksystemen, welche eine Bankverbindung des Benutzers mit der Identität des Benutzers verknüpfen. Es kann dann mittels der Fähigkeit des Benutzers, auf die Bankverbindung z.B. über eine Banktransaktion zuzugreifen, die Identität überprüft werden und so die Identifizierung durchgeführt werden.

Jedoch können solche vorbekannten Identifizierungs-Verfahren die Eigenart aufweisen, dass das Identifizieren vergleichsweise kompliziert ist und/oder eine vergleichsweise lange Zeitdauer in Anspruch nimmt. Zum Beispiel können Identifizierungs-Verfahren, welche darauf beruhen, dass der Benutzer an einer authorisierten Stelle persönlich vorstellig wird, benötigen, dass der Benutzer zu den Geschäftszeiten der authorisierten Stelle diese aufsucht, um sein Idenfizierungs-Dokument vorzulegen. Dies kann besonders aufwändig und zeitintensiv sein, insbesondere dann, wenn die authorisierte Stelle vergleichsweise weit entfernt von einem Wohn- oder Arbeitsplatz des Benutzers liegt. Auch kann es nur begrenzt oder nicht möglich sein, ein spontanes Identifizieren des Benutzers z.B. außerhalb der Geschäftszeiten der authorisierten Stelle durchzuführen, etwa in den Abendstunden oder an Feiertagen.

Bei Identifizierungs-Verfahren, welche das Durchführen einer Banktransaktion unter Verwendung der Bankverbindung des Benutzers benötigen, kann auch eine vergleichsweise lange Latenzzeit auftreten. Dies kann daran liegen, dass typischerweise das Durchführen von Banktransaktionen eine vergleichsweise lange Zeitdauer, etwa im Bereich von Tagen, in Anspruch nimmt. Auch in solchen Szenarien kann das spontane Identifizieren des Benutzers nicht oder nur eingeschränkt möglich sein.

Gerade in Bezug auf Internet-basierte Online-Geschäftstätigkeiten, welche der Benutzer z.B. von Zuhause mittels eines Endgeräts wie einem Computer, einem Mobiltelefon, einem Fernseher, einem Tablet-PC, einem Laptop etc. durchführt, kann jedoch häufig das Identifizieren des Benutzers erstrebenswert sein. Dies kann z.B. der Fall sein, wenn die Geschäftstätigkeit des Benutzers altersrelevante oder besonders identitäts-kritische Transaktionen umfasst. In einem solchen Fall kann es insbesondere wünschenswert sein, das Identifizieren des Benutzers auf einer kurzen Zeitskala und/oder spontan durchzuführen. Insbesondere kann es erstrebenswert sein, das Identifizieren des Benutzers derart durchzuführen, dass es unabhängig von einer Position des Benutzers bzw. dessen Endgeräts ist, sodass der Benutzer auch von zu Hause oder vom Arbeitsplatz das die Identifikation erhalten kann.

Die US 2012/0106805 A1 offenbart ein Verfahren zum Überprüfen der Identität eines entfernten Benutzers, welches beinhaltet während einer Authentifizierungssitzung Posieranweisungen für ein entferntes Gerät durch einen Host bereitzustellen. Weiterhin empfängt der Host ein Bild von dem Gerät, welches er analysieren kann, um zu bestimmen ob die Posieranweisungen befolgt wurden. Aufgrund dieser Bestimmung und optionalen weiterer Faktoren verifiziert der Host ein Identitätsattribut des Nutzers.

Die Webseite der Firma IDscan (URL: https://web.archive.org/web/20121116001247/http://idscan.co.uk/id-check-idsmart) beschreibt ein Verfahren umfassend die Bildaufnahme eines Ausweisdokumentes und die schnelle Validierung desselben durch Abgleich mit einer Dokumentenbibliothek. Weiterhin kann Authentifizierung erreicht werden indem der Nutzer um die Aufnahme eines Fotos gebeten wird. Anschließend wird mittels Gesichtserkennungsalgorithmen validiert, ob das Bild auf dem Ausweisdokument und des Nutzers übereinstimmen.

Es besteht ein Bedarf für verbesserte Techniken zum Identifizieren eines Benutzers. Insbesondere besteht ein Bedarf für solche Techniken, welche eine vergleichsweise einfache und vergleichsweise schnelle Identifizierung des Benutzers ermöglichen. Es besteht weiterhin ein Bedarf für solche Techniken, welche ein Identifizieren des Benutzers unabhängig von einer Position des Benutzers ermöglichen und die ein fälschungs- und täuschungssicheres Identifizieren ermöglichen.

Diese Aufgabe wird von den unabhängigen Ansprüchen gelöst. Die abhängigen Ansprüche definieren weitere Ausführungsformen.

Gemäß einem Aspekt betrifft die Erfindung ein Verfahren zum Identifizieren eines Benutzers. Das Verfahren umfasst das Empfangen von ersten Bilddaten von einem Endgerät des Benutzers auf einem Identifizierungs-Server. Die ersten Bilddaten bilden ein Identifizierungs-Dokument mit einem Lichtbild des Benutzers ab. Das Verfahren umfasst weiterhin das Empfangen von zweiten Bilddaten von dem Endgerät des Benutzers auf dem Identifizierungs-Server, wobei die zweiten Bilddaten eine Gesichtspartie des Benutzers abbilden. Das Verfahren umfasst weiterhin das Identifizieren des Benutzers, wobei das Identifizieren das Vergleichen der ersten Bilddaten mit den zweiten Bilddaten umfasst, um eine Ähnlichkeit des Lichtbilds des Benutzers aus den ersten Bilddaten mit der Gesichtspartie des Benutzers aus den zweiten Bilddaten zu bestimmen. Das Verfahren kann weiterhin das Bestimmen von Identifizierungs-Daten des Benutzers aus dem Identifizierungs-Dokument umfassen.

Zum Beispiel kann der Identifizierungs-Server eine Web-Server sein, der mit dem Internet verbunden ist. Entsprechend kann das Empfangen der ersten und/oder zweiten Bilddaten von dem Endgerät des Benutzers über das Internet geschehen.

Das Vergleichen der ersten Bilddaten mit den zweiten Bilddaten kann automatisch, teilautomatisch oder manuell geschehen. Zum Beispiel kann bei automatischen und/oder teilautomatischen Techniken das Vergleichen der Bilddaten umfassen: Extrahieren einer Abbildung des Lichtbilds des Benutzers aus den ersten Bilddaten; und Durchführen einer Bildregistrierung zwischen der Abbildung des Lichtbilds und den zweiten Bilddaten, um ein Ähnlichkeitsmaß zwischen der Abbildung des Lichtbilds und den zweiten Bilddaten zu erhalten; und Durchführen eines Schwellenwertvergleichs zwischen dem Ähnlichkeitsmaß und einem vorgegebenen Referenz-Schwellenwert. Es ist auch möglich, dass der Referenz-Schwellenwert in Abhängigkeit einer Sicherheits-Stufe vorgegeben wird, wobei die Sicherheitsstufe indikativ für eine angestrebte Fälschungs- und Täuschungssicherheit sein kann. Daten, die indikativ für die Sicherheitsstufe sind, können an dem Identitäts-Server von einem weiteren Server empfangen werden.

Derart kann es möglich sein, automatisch oder teil-automatisch zu überprüfen, ob das Lichtbild des Benutzers, wie es auf den ersten Bilddaten erhalten wird, eine große oder kleine Ähnlichkeit mit der Gesichtspartie des Benutzers, wie es aus den zweiten Bilddaten erhalten wird, aufweist. Bei einer genügend großen Ähnlichkeit, d. h. bei einem positiven Ergebnis des Schwellenwertvergleichs, kann angenommen werden, dass Identifizierungs-Dokument und Benutzer zusammen gehören. Die Identifizierungs-Daten beschreiben dann mit großer Wahrscheinlichkeit die Identität des Benutzers und können für das Identifzieren verwendet werden. Ein positives Identifizierungs-Ergebnis kann erhalten werden.

Entsprechend wäre es auch möglich, dass das Vergleichen der ersten Bilddaten mit den zweiten Bilddaten manuell z.B. durch ein Bedienpersonal erfolgt. Das Bedienpersonal kann z.B. die ersten und zweiten Bilddaten von dem Identifizierungs-Server erhalten und derart das Vergleichen der ersten und zweiten Bilddaten durch Augenschein durchführen. Z.B. kann das manuelle Vergleichen lediglich selektiv dann durchgeführt werden, wenn keine genügend grpße Ähnlichkeit des Lichtbilds des Benutzers mit der Gesichtspartie bei automatischen Techniken festgestellt wurde.

Bei einer großen (geringen) Ähnlichkeit des Lichtbilds des Benutzers mit der Gesichtspartie des Benutzers kann mit hoher (geringer) Wahrscheinlichkeit angenommen werden, dass der Benutzer die durch das Identifizierungs-Dokument identifizierte Person ist. Ist z.B. diese Ähnlichkeit größer als ein vorbestimmter Schwellenwert, so kann die Identität oder bestimmte Identitäts-Kriterien wie etwa das Alter oder der Name des Benutzers aus den bestimmten Identifizierungs-Daten des Identifizierungs-Dokuments bestimmt werden.

Das Bestimmen der Identifizierungs-Daten des Benutzers aus den ersten Bilddaten anhand des Identifizierungs-Dokuments kann z.B. umfassen: Durchführen einer automatischen Texterkennung der ersten Bilddaten zum Bestimmen der Identifizierungs-Daten in elektronisch lesbarer Form. Optional kann das Bestimmen der Identifizierungs-Daten umfassen: Erkennen eines Typs des Identifizierungs-Dokuments anhand der ersten Bilddaten. Wie obenstehend beschrieben, sind verschiedenen Typen von Identifizierungs-Dokumenten bekannt, etwa Pässe, Personalausweise, Führerscheine, etc., jeweils in unterschiedlicher Form für verschiedene Staaten oder Hoheitsgebiete bzw. Jurisdiktionen. In der Regel weisen die verschiedenen Typen von Identifizierungs-Dokumenten unterschiedliche Identifizierungs-Daten des Benutzers auf. Deshalb kann es erstrebenswert sein, zunächst den Typ des Identifizierungs-Dokuments zu erkennen und anschließend die Identifizierungs-Daten zu bestimmen.

Z.B. können die Identifizierungs-Daten umfassen: Alter des Benutzers, Name des Benutzers, Adresse des Benutzers, Bankverbindung des Benutzers, und/oder Geburtsdatum des Benutzers, Kennnummer des Identifizierungs-Dokuments, Ausstellungsort des Identifizierungs-Dokuments, Ausstellungsdatum des Identifizierungs-Dokuments, Gültigkeit des Identifizierungs-Dokuments, usf.

Es ist möglich, dass das Verfahren weiterhin umfasst: Abgleichen der bestimmten Identifizierungs-Daten mit Referenz-Identifizierungs-Daten. Es ist möglich, dass das Verfahren das Empfangen der Referenz-Identifizierungs-Daten auf dem Identifizierungs-Server umfasst. Alternativ oder zusätzlich wäre es möglich, dass das Verfahren umfasst: In Abhängigkeit von dem Vergleichen, Senden der Identifizierungs-Daten des Benutzers an einen weiteren Server. Es wäre dann möglich, dass das Abgleichen der bestimmten Identifizierungs-Daten mit Referenz-Identifizierungs-Daten auf dem weiteren Server geschieht. Der weitere Server kann z.B. ein Server einer Partei sein, die das Identifizieren anfragt, also z.B. ein Webshop-Server, ein Bank-Server, etc.

Durch die vorangehend beschriebenen Techniken kann es möglich sein, ein vergleichsweise schnelles Identifizieren des Benutzers durchzuführen. Zum Beispiel kann es möglich sein, dass der Benutzer mittels des Endgeräts die ersten und zweiten Bilddaten erfasst und über das Internet an den Identifizierungs-Server sendet. Dazu muss sich der Benutzer nicht in einer besonderen örtlichen Beziehung in Bezug auf den Identifizierungs-Server befinden, z.B. kann sich der Benutzer zuhause oder an seinem Arbeitsplatz befinden. Wenn die ersten und zweiten Bilddaten auf dem Identifizierungs-Server empfangen sind, kann es ohne signifikante weitere Wartezeit möglich sein, das Identifizieren des Benutzers durch das Vergleichen der ersten und zweiten Bilddaten und das Bestimmen der Identifizierungs-Daten anhand des Identifizierungs-Dokuments durchzuführen.

Darüber hinaus kann durch das Vergleichen der ersten und zweiten Bilddaten zum Bestimmen der Ähnlichkeit ein vergleichsweise sicheres Identifizieren ermöglicht werden. Es werden nachfolgend Szenarien beschrieben, welche eine Sicherheit des Identifizieren zusätzlich fördern können.

Das Verfahren kann z.B. weiterhin umfassen: Erzeugen von Validierungsdaten auf dem Identifizierungs-Server und Senden der Validierungsdaten von dem Identifizierungs-Server an das Endgerät. Die Validierungsdaten können es dem Endgerät ermöglichen, zusätzliche Validierungsinformation in den ersten Bilddaten und/oder in den zweiten Bilddaten zu beinhalten. Das Identifizieren kann weiterhin das Bestimmen der Validierungsinformation aus den ersten Bilddaten und/oder aus den zweiten Bilddaten umfassen und das Validieren der bestimmten Validierungsinformation anhand der erzeugten Validierungsdaten.

Es ist möglich, dass das Erzeugen der Validierungsdaten auf dem Identifizierungs-Server umfasst: Berücksichtigen von Zufallsergebnissen und/oder Berücksichtigen einer Uhrzeit des Erzeugens und/oder Berücksichtigen einer Identifizierung des Endgeräts des Benutzers. Solche Techniken können es erlauben, dass unterschiedlich erzeugte Validierungsdaten unterschiedliche Werte aufweisen. Derart kann es möglich sein, dass die konkrete Form der Validierungsdaten abhängig von dem konkreten Vorgang des Identifizierens des Benutzers ist. Z.B. können validierte Validierungsinformationen für eine Echtheit der ersten und/oder zweiten Bilddaten indikativ sein. Fälschungen oder Täuschungen können vermieden werden.

Durch das Erzeugen der Validierungsdaten auf dem Identifizierungs-Server und das anschließende Validieren der bestimmten Validierungsinformation anhand der erzeugten Validierungsdaten kann z.B. sichergestellt werden, dass ein enger zeitlicher Zusammenhang zwischen dem Erzeugen der ersten und zweiten Bilddaten und dem Erzeugen der Validierungsdaten besteht. Zum Beispiel kann nämlich das Erzeugen der Validierungsdaten mittels einer proprietären Technik und/oder mittels zufällig erzeugten Anteilen (Zufallsgenerator) geschehen, sodass es nicht oder nur eingeschränkt möglich ist, dass vorab gefertigte Bilddaten, d. h. Bilddaten, die vor dem Erzeugen der Validierungsdaten erzeugt wurden, verwendet werden. In anderen Worten können die Validierungsdaten einen bestimmten Erzeugungszeitpunkt und/oder eine bestimmte Lebensdauer aufweisen, und es kann durch das Erzeugen und Verwenden der Validierungsdaten sichergestellt werden, dass die Bilddaten nach dem Erzeugungszeitpunkt der Validierungsdaten bzw. innerhalb der Lebensdauer der Validierungsdaten erstellt wurden.

Die Validierungsinformation kann mindestens eines der folgenden Elemente umfassen: ein Wasserzeichen, das den ersten Bilddaten und/oder den zweiten Bilddaten aufgeprägt ist; und/oder einen alphanumerischen Code, der in den ersten Bilddaten und/oder den zweiten Bilddaten abgebildet ist; und/oder eine Position und/oder Entfernung einer die Bilddaten erfassenden Kamera zu dem Identifizierungs-Dokument und/oder zu der Gesichtspartie; und/oder einen alphanumerischen Code, der in den ersten Bilddaten und/oder den zweiten Bilddaten abgebildet ist und der einen Zeitpunkt oder eine Zeitspanne beinhaltet.

Es ist möglich, die Validierungsinformation automatisch, z.B. mittels einfacher Bildbearbeitungs-Techniken, in den ersten Bilddaten und / oder in den zweiten Bilddaten zu beinhalten.

Das Wasserzeichen kann z.B. eine semitransparent überlagerte Ebene (engl. layer) der ersten und/oder zweiten Bilddaten sein. Das Wasserzeichen kann z.B. einen alphanumerischen Code und/oder ein maschinenlesbares Muster beinhalten. Letztere können z.B. als die Validierungsinformation aus den ersten und/oder zweiten Bilddaten bestimmt werden und mit den Validierungsdaten verglichen werden. Der alphanumerische Code und / oder das maschinenlesbare Muster können den ersten und/oder zweiten Bilddaten überlagert werden.

Im Allgemeinen können die ersten Bilddaten und / oder die zweiten Bidldaten die Validierungsinformation auch implizit beinhalten. Es ist etwa möglich, dass die Validierungsdaten eine Anweisung an den Benutzer beinhalten, auf welche Art und Weise, d. h. unter welcher Position und/oder Entfernung, die ersten und/oder zweiten Bilddaten das Identifizierungs-Dokument und / oder die Gesichtspartie abbilden sollen; d.h. wie die ersten und / oder zweiten Bilddaten mittels des Endgeräts erfasst werden sollen. Diesbezüglich wäre z.B. eine mögliche, rein exemplarisch und nicht limitierende Form der Validierungsdaten: "Abstand von 10-20 cm unter einer Perspektive von links oben". In einem solchen Szenario können die ersten und/oder zweiten Bilddaten die zugehörige Validierungsinformation implizit beinhalten, d. h. zum Beispiel in Form der perspektivischen Eigenschaften der in den ersten und/oder zweiten Bilddaten abgebildeten Elemente.

Entsprechend wäre es möglich, dass der Benutzer basierend auf den Validierungsdaten aufgefordert wird, die Validierungsinformation - etwa einen bestimmten alphanumerischen Code oder ein bestimmtes Muster - aufzuschreiben und in den ersten Bilddaten und/oder den zweiten Bilddaten zu beinhalten. Dies kann dadurch geschehen, dass der Benutzer die aufgeschriebene Validierungsinformation, etwa auf einem Zettel oder einem Blatt Papier, beim Erfassen der ersten Bilddaten und/oder der zweiten Bilddaten mit in einem von den ersten und / oder zweiten Bilddaten abgebildetem Gesichtsfeld positioniert.

Das Verfahren kann weiterhin umfassen: Erzeugen von Steuerdaten auf dem Identifizierungs-Server und Senden der Steuerdaten von dem Identifizierungs-Server an das Endgerät. Die Steuerdaten können das Endgerät instruieren, die ersten Bilddaten und/oder die zweiten Bilddaten mit bestimmten Bildparametern zu erfassen. Die Bildparameter können vorzugsweise aus folgender Gruppe ausgewählt sein: Anzahl von Bildern; Belichtungsparameter; Blitzfunktion; Bildauflösung. Die Belichtungsparameter können z.B. aus folgender Gruppe ausgewählt werden: Blendenzahl, Belichtungszeit, Lichtempfindlichkeit.

Umfassen die ersten Bilddaten und / oder die zweiten Bilddaten eine Abfolge von Bildern, so können die Steuerdaten jeweils unterschiedlich für die verschiedenen Bilder der Abfolge von Bildern sein.

Zum Beispiel kann das Erzeugen der Steuerdaten in Abhängigkeit von einem Zufallswert erfolgen, in Abhängigkeit eines Zeitpunkts erfolgen und/oder in Abhängigkeit von einer Identität des Endgeräts des Benutzers erfolgen. Derart kann sichergestellt werden, dass verschiedene erzeugte Steuerdaten verschiedene Werte aufweisen.

Es wäre möglich, dass das Verfahren umfasst: Validieren von optischen Eigenschaften der ersten Bilddaten und / oder zweiten Bilddaten basierend auf den Steuerdaten. Z.B. kann das Validieren der optischen Eigenschaften umfassen: Bestimmen eines Helligkeits-Histogramms für die ersten und/oder zweiten Bilddaten und Korrelieren des bestimmten Helligkeits-Histogramms mit Belichtungsparametern der Steuerdaten. Es wäre möglich, dass das Verfahren umfasst: Bestimmen eines Bildrauschens für die ersten und/oder zweiten Bilddaten und Korrelieren des bestimmten Bildrauschens mit Belichtungsparametern der Steuerdaten. Z.B. können die ersten und/oder zweiten Bilddaten die Belichtungsparameter und/oder einen Indikator der Blitzfunktion in elektronisch lesbarer Form beinhalten. Dann können diese mit den auf dem Server erzeugten Steuerdaten verglichen werden.

Es können Effekte erzielt werden, insbesondere hinsichtlich von Fälschungs- und Täuschungssicherheit, die vergleichbar sind mit den Effekten, wie sie voranstehen in Bezug auf die Validierungsdaten und Validierungsinformat diskutiert wurden. So kann durch das Vorgeben der Bildparameter, mit denen das Endgerät die ersten und/oder zweiten Bilddaten erfasst, vermieden werden, dass vorgefertigte erste und zweite Bilddaten im Rahmen des gegenwärtig diskutierten Verfahrens zum Identifizieren des Benutzers an den Identifizierungs-Server übertragen werden.

Die ersten Bilddaten und/oder die zweiten Bilddaten können aus folgender Gruppe ausgewählt sein: ein Bild; einen Film; mindestens zwei Bilder oder zwei Filme, die sequentiell zu unterschiedlichen Zeitpunkten erfasst sind; mindestens zwei Bilder oder zwei Filme, die mit jeweils unterschiedlichen Belichtungsparametern erfasst sind, mindestens zwei Bilder oder Filme, die das Identifizierungs-Dokument oder die Gesichtspartie aus unterschiedlichen Perspektiven und/oder Abständen abbilden.

Z.B. können die voranstehend beschriebenen Steuerdaten festlegen, welche Elemente die ersten Bilddaten und / oder die zweiten Bilddaten beinhalten.

In verschiedenen Szenarien kann es z.B. möglich sein, dass die ersten Bilddaten und/oder die zweiten Bilddaten jeweils drei Bilder des Identifizierungs-Dokuments und der Gesichtspartie des Benutzers, aus jeweils unterschiedlichen Perspektiven und sequentiell zu unterschiedlichen Zeitpunkten erfasst sind, beinhalten.

Zum Beispiel kann es derart möglich sein, Täuschungen zu vermeiden, die darauf beruhen, dass ein Abbild von vorgefertigten Photographien für die ersten Bilddaten und / oder die zweiten Bilddaten erfasst wird. Dies kann der Fall sein, da z.B. eine Abbildung der Gesichtspartie in den zweiten Bilddaten unterschiedlich ist für ein Szenario, in dem die zweiten Bilddaten anhand der tatsächlichen Gesichtspartie des Benutzers, z.B. mittels einer Kamera erfasst werden, und für ein Szenario, bei dem die zweiten Bilddaten durch Erfassen einer vorgefertigten, zweidimensionalen Photographie der Gesichtspartie des Benutzers erhalten werden.

Durch Verwenden von mindestens zwei Bildern, die mit jeweils unterschiedlichen Belichtungsparametern, etwa unterschiedlichen Belichtungszeiten, erfasst sind, kann es möglich sein, bestimmte Sicherheitsmerkmale des Identifizierungs-Dokuments in den ersten Bilddaten gut sichtbar zu machen. Zum Beispiel können verschiedene Typen von Identifizierungs-Dokumenten solche Sicherheitsmerkmale wie Wasserzeichen, Hologramme, Sicherheitsstrukturen etc. beinhalten. Typischerweise können solche Sicherheitsmerkmale insbesondere dann sichtbar werden, wenn unterschiedliche Belichtungsparameter und/oder Blitzfunktionen verwendet werden.

Auch in Bezug auf die zweiten Bilddaten, kann die Gesichtspartie des Benutzers durch Verwenden von unterschiedlichen Belichtungsparametern und / oder Blitzfunktionen auf Echtheit überprüft werden. So kann es z.B. möglich sein, durch das Verwenden von Blitzfunktionen einen sogenannten "Rote-Augen-Effekt" in den zweiten Bilddaten für die Gesichtspartie des Benutzers gezielt zu stimulieren oder zu vermeiden. Werden z.B. zwei Bilder im Rahmen der zweiten Bilddaten empfangen, die einmal mit solchen Blitzparametern erfasst wurden, die den "Rote-Augen-Effekt" stimulieren, und einmal mit solchen Blitzparametern empfangen wurden, die den "Rote-Augen-Effekt" unterdrücken, so kann das Vorhandensein des "Rote-Augen-Effekts" in den zweiten Bilddaten ein Indiz für die Echtheit der empfangenen zweiten Bilddaten sein.

Das Verfahren umfasst weiterhin: Empfangen einer Identifizierungs-Anfrage von einem weiteren Server auf dem Identifizierungs-Server. Das Verfahren kann umfassen: in Reaktion auf das Identifizieren, Senden eines Identifizierungs-Ergebnisses von dem Identifizierungs-Server an den weiteren Server unter Bezugnahme auf die empfangene Identifizierungs-Anfrage.

Zum Beispiel kann der weitere Server ein Webshop-Server oder ein Bank-Server sein. Jedoch ist die spezielle Ausgestaltung des weiteren Servers nicht besonders limitiert und entsprechende Techniken können für eine große Vielfalt an weiteren Servern eingesetzt werden.

Das Verfahren kann z.B. weiterhin umfassen: Überprüfen, ob eine Identifizierung des Benutzers benötigt wird, wobei das Überprüfen basierend auf einer Verbindung zwischen einem weiteren Server und dem Endgerät des Benutzers stattfindet.

Das Verfahren umfasst weiterhin: In Reaktion auf das Empfangen der Identifizierungs-Anfrage, Senden einer Schlüssel-Phrase von dem Identifizierungs-Server an den weiteren Server. Als Reaktion auf die empfangene Schlüssel-Phrase sendet der weitere Server die Schlüssel-Phrase an ein weiteres Endgerät des Benutzers oder an das Endgerät, vorzugsweise zum Initiieren des Identifizierens. Zum Beispiel kann die Schlüssel-Phrase einen Identifizierungs-Vorgang auf dem Identifizierungs-Server eindeutig bezeichnen (engl, token). Das Endgerät baut eine Verbindung mit dem Identifizierungs-Server unter Verwendung der Schlüssel-Phrase auf; z.B. kann hierzu der Benutzer aufgefordert werden, die Schlüssel-Phrase, die von dem weiteren Endgerät wiedergegeben wird, auf dem Endgerät einzugeben. Wird z.B. die Schlüssel-Phrase direkt an das Endgerät des Benutzers gesendet, so kann das Endgerät auch automatisch die Verbindung mit dem Identifizierungs-Server unter Verwendung der Schlüssel-Phrase aufbauen. Durch das Verwenden einer Schlüssel-Phrase, die den Identifizierungs-Vorgang eindeutig bezeichnet, kann z.B. verhindert werden, das unautorisierte Dritte das Identifizieren stören. Hierzu kann die Schlüssel-Phrase z.B. ein alphanumerischer Code von genügend großer Länge sein, um derart ein Erraten der Schlüssel-Phrase zu verhindern.

Der Informationsgehalt jeweils der Identifizierungs-Anfrage und des Identifizierungs-Ergebnisses kann in verschiedenen Szenarien unterschiedlich sein. Z.B. kann die Identifizierungs-Anfrage lediglich den Bedarf des weiteren Servers an dem Identifizieren indizieren. Z.B. kann die Identifizierungs-Anfrage die Referenz-Identifzierungsdaten beinhalten.

Das Identifizierungs-Ergebnis und/oder die Identifizierungs-Anfrage können mindestens eines der folgenden umfassen: einen Indikator, der ein positives oder ein negatives Identifizierungs-Ergebnis indiziert; einen Namen des Benutzers; einen Vornamen und/oder einen Nachnamen des Benutzers; ein Geburtsdatum und/oder ein Alter des Benutzers; einen Indikator, der indiziert, ob das Alter des Benutzers größer als ein Altersschwellenwert ist; einen Wohnort des Benutzers; eine Adresse des Benutzers; eine Postleitzahl des Wohnorts des Benutzers; anonymisierte Identifikationsdaten des Benutzers; eine Klassifikation von Identifikations-Daten des Benutzers in Bezug auf eine Referenzklassifikation; ein Benutzer-Passwort.

Z.B. kann die Referenzklassifikation einen bestimmten Bereich von Identifikations-Daten spezifizieren, etwa ein bestimmtes Postleitzahlen-Gebiet, bestimmte Telefonnummern usf. Es kann dann überprüft werden, ob die Identifikations-Daten hierunter fallen oder nicht. Der Altersschwellenwert kann z.B. 18 Jahre oder 21 Jahre betragen und somit einer Volljährigkeit entsprechen.

Das Identifizieren des Benutzers kann weiterhin Vergleichen der bestimmten Identifizierungs-Daten mit der Identifizierungs-Anfrage umfassen.

Durch dieses Vergleichen kann es möglich sein, eine Authentifizierung des Benutzers, basierend auf dem Identifizieren, zu ermöglichen. Der Benutzer kann benötigte Identifizierungs-Kriterien zunächst z.B. an den weiteren Server übermitteln, sodass dieser diese im Rahmen der Identifzierungs-Anfrage an den Identifizierungs-Server weitergeben kann. Im Rahmen der voranstehend beschriebenen Techniken des Identifizierens werden dann die Identifizierungs-Daten ermittelt und diese mit den Identifzierungs-Kriterien verglichen. Bei Übereinstimmung kann eine Authorisierung erteilt werden und andernfalls verweigert werden. Das Vergleichen kann in verschiedenen Szenerien auch auf dem weiteren Server stattfinden - dazu können die Identifizierungs-Daten als Teil des Identifizierungs-Ergebnisses ganz oder teilweise an den weiteren Server gesendet werden.

Zum Beispiel wäre es in einem Szenario möglich, dass die Identifizierungs-Anfrage, die der Identifizierungs-Server von dem weiteren Server empfängt, den Namen des Benutzers beinhaltet. Der Identifizierungs-Server könnte dann mittels der hierin beschriebenen Techniken das Verfahren zum Identifizieren des Benutzers durchführen und die bestimmten Identifizierungs-Daten des Benutzers mit dem in der Identifizierungs-Anfrage enthaltenen Namen des Benutzers vergleichen. Je nachdem, ob dieses Identifizierungs-Kriterium eine Übereinstimmung liefert oder nicht, kann das gesendete Identifizierungs-Ergebnis einen Indikator beinhalten, der ein positives oder ein negatives Identifizierungs-Ergebnis indiziert. Alternativ oder zusätzlich könnte das Identifizierungs-Ergebnis einen Indikator beinhalten, der indiziert, ob das Alter des Benutzers größer als ein Altersschwellenwert ist, z.B. größer als 18 Jahre.

In einem entsprechenden Szenario wäre es möglich, dass die von dem weiteren Server empfangene Identifizierungs-Anfrage keine näheren Details zu der Identität des Benutzers beinhaltet. In einem solchen Fall könnte im Rahmen des Identifizierens des Benutzers kein Vergleichen zwischen den bestimmten Identifizierungs-Daten des Benutzers und Informationen, die in der Identifizierungs-Abfrage enthalten wären, stattfinden. Entsprechend wäre es möglich, dass das gesendete Identifizierungs-Ergebnis einen entsprechend größeren Informationsgehalt aufweist, z.B. den Namen des Benutzers und/oder das Geburtsdatum oder ein Alter des Benutzers.

Zum Beispiel wäre es möglich, dass der Identifizierungs-Server das Benutzer-Passwort von dem Endgerät empfängt. Zum Beispiel kann das Benutzer-Passwort von dem Benutzer gewählt sein. Dann wäre es möglich, dass der Identifizierungs-Server das Benutzer-Passwort z.B. im Rahmen des Identifizierungs-Ergebnisses und / oder separat an den weiteren Server sendet. Dadurch kann es möglich sein, dass für ein späteres Identifizieren auf dem weiteren Server der Benutzer lediglich sein Benutzer-Passwort angeben muss, dass zusammen mit den Identifizierungs-Daten dem weiteren Server bekannt ist.

Wie aus dem Obenstehenden ersichtlich ist, können in unterschiedlichen Szenarien ein größerer oder kleinerer Informationsgehalt jeweils in der Identifizierungs-Anfrage bzw. in dem Identifizierungs-Ergebnis beinhaltet sein. In anderen Worten kann die Logik des Überprüfen eines Identifizierungs-Kriteriums zu einem größeren oder kleiner Teil auf dem Identifizierungs-Server (dem weiteren Server) vorhanden sein.

Darüber hinaus kann je nach Szenario ein Typ der in dem Identifizierungs-Ergebnis und/oder in der Identifizierungs-Anfrage beinhalteten Information unterschiedlich sein. Zum Beispiel kann es in dem Fall einer Altersverifikation bzw. einer Altersauthentifizierung des Benutzers ausreichend sein, wenn das Identifizierungs-Ergebnis das Alter des Benutzers oder lediglich einen Indikator, der indiziert, ob das Alter des Benutzers größer als ein Altersschwellenwert ist, beinhaltet. Wird jedoch eine weitergehende Identifizierung des Benutzers gewünscht, so können die entsprechenden weiteren Informationen, etwa Name, Wohnort und sonstige Daten in dem Identifizierungs-Ergebnis beinhaltet sein. Im Falle einer Verifikation von Benutzerdaten ist es möglich, dass die zu verifizierenden Benutzerdaten in der Identifizierungs-Anfrage beinhaltet sind und das Identifizierungs-Ergebnis lediglich einen postitiven oder negativen Indikator beinhaltet, der eine positive oder negative Verifikation der Benutzerdaten indiziert. Es sind verschiedene Kombinationen der vorab beschriebenen Szenarien möglich.

Das Identifizieren kann weiterhin mindestens einen der folgenden Schritte umfassen: Verifizieren von Integritätsmerkmalen des Identifizierungs-Dokuments aus den ersten Bilddaten, wobei die Integritätsmerkmale Prüfsummen und/oder Wasserzeichen und/oder Hologramm-Abbildungen und/oder biometrische Daten beinhalten; und Verifizieren von Meta-Daten, die mit den ersten Bilddaten und/oder mit den zweiten Bilddaten empfangen werden, wobei die Meta-Daten einen Aufnahmezeitpunkt der ersten Bilddaten und/oder einen Aufnahmezeitpunkt der zweiten Bilddaten und/oder eine Identifikation des Endgeräts und/oder eine Aufnahmeposition der ersten Bilddaten und/oder eine Aufnahmeposition der zweiten Bilddaten umfassen.

Das Verfahren kann umfassen: Durchführen eines Konsistenz-Checks des Identifizierungs-Dokuments basierend auf den Integritätsmerkmalen des Identifizierungs-Dokuments. Z.B. kann mittels Prüfsummen überprüft werden, ob einzelne Ziffern oder Buchstaben der Identifizierungs-Daten des Identifizierungs-Dokuments verändert wurden, etwa aus einer "1" eine "4" gemacht wurde usf. Fälschungen können vermieden werden.

Für die verschiedenen Typen von Identifizierungs-Dokumenten sind verschiedene Arten von Integritätsmerkmalen bekannt. Zum Beispiel kann es mittels der Prüfsumme möglich sein, Fälschungen und/oder Fehlbestimmungen der Identifizierungs-Daten des Benutzers zu erkennen. Das Vorhandensein von Integritätsmerkmalen wie Wasserzeichen und/oder Hologramm-Abbildungen kann es darüber hinaus ermöglichen, die Integrität des in den ersten Bilddaten abgebildeten Identifizierungs-Dokuments zu verifizieren. Es ist auch möglich, dass aus den ersten Bilddaten biometrische Daten des Benutzers, etwa eine Augenfarbe etc., bestimmt werden können. Das Vergleichen der ersten Bilddaten mit den zweiten Bilddaten kann dann auch ein Vergleichen der biometrischen Daten mit den zweiten Bilddaten beinhalten. Zum Beispiel kann eine Augenfarbe des Benutzers, wie sie in den biometrischen Daten des Identifizierungs-Dokuments spezifiziert ist, mit der in den zweiten Bilddaten abgebildeten Augenfarbe der Gesichtspartie des Benutzers verglichen werden.

Das Verfahren kann weiterhin das Erfassen der ersten Bilddaten mittels einer Kamera umfassen, wobei die ersten Bilddaten ein Identifizierungs-Dokument mit einem Lichtbild des Benutzers abbilden. Das Verfahren kann außerdem das Erfassen der zweiten Bilddaten mittels der Kamera umfassen, wobei die zweiten Bilddaten eine Gesichtspartie des Benutzers abbilden. Weiterhin kann das Verfahren das Senden der ersten Bilddaten und der zweiten Bilddaten von dem Endgerät des Benutzers an den Identifizierungs-Server für das Identifizieren des Benutzers umfassen. Das Identifizieren beruht auf einem Vergleich der ersten Bilddaten mit den zweiten Bilddaten, um eine Ähnlichkeit des Lichtbilds des Benutzers aus den ersten Bilddaten mit der Gesichtspartie des Benutzers aus den zweiten Bilddaten zu bestimmen. Das Identifizieren beruht weiterhin auf einem Bestimmen von Identifizierungs-Daten des Benutzers aus den ersten Bilddaten anhand des Identifizierungs-Dokuments.

Zum Beispiel kann die Kamera ein Teil des Endgeräts sein. Es wäre aber auch möglich, dass das Endgerät eine externe Kamera steuert. Zum Beispiel kann die Kamera eine optische Kamera, eine Webcam oder ähnliches sein.

Das Verfahren kann z.B. weiterhin umfassen: Empfangen von Validierungsdaten auf dem Endgerät, wobei die Validierungsdaten es ermöglichen, zusätzliche Validierungsinformation in den ersten Bilddaten und/oder in den zweiten Bilddaten zu beinhalten. Das Erfassen der ersten Bilddaten und/oder das Erfassen der zweiten Bilddaten kann weiterhin umfassen: Beinhalten der Validierungsinformation in den ersten Bilddaten und/oder in den zweiten Bilddaten.

Es ist z.B. möglich, dass die Validierungsinformation für die ersten Bilddaten eine bestimmte Perspektive und/oder einen bestimmten Abstand der Kamera zu dem Identifizierungs-Dokument beinhalten. Alternativ oder zusätzlich ist es z.B. möglich, dass die Validierungsinformation für die zweiten Bilddaten eine bestimmte Perspektive und/oder einen bestimmten Abstand der Kamera zu der Gesichtspartie beinhalten.

Insbesondere in einem solchen Fall wäre es möglich, dass das Verfahren weiterhin umfasst: Ausgeben von Anweisungen, die von der Validierungsinformation abhängigen, mittels einer Benutzerschnittstelle des Endgeräts an den Benutzer. Die Benutzerschnittstelle kann z.B. eine graphische Anleitung, einen Text, und/oder eine Sprach-Anweisung beinhalten. Z.B. kann die Anweisung den Benutzer auffordern die Kamera in Bezug auf das Identifizierungs-Dokument und/oder die Gesichtspartie unter einer bestimmten Perspektive und/oder Entfernung zu positionieren.

Das Verfahren kann weiterhin umfassen: Empfangen von Steuerdaten von dem Identifizierungs-Server auf dem Endgerät, wobei das Erfassen der ersten Bilddaten und/oder das Erfassen der zweiten Bilddaten mit einer bestimmten Abfolge von Bildparametern, die in den Steuerdaten beinhaltet sind, geschieht, wobei die Bildparameter aus folgender Gruppe ausgewählt sind: Anzahl von Bildern; Belichtungsparameter; Blitzfunktion; Bildauflösung.

Durch die verschiedenen Belichtungsparameter können Reflektionen in den ersten und/oder zweiten Bilddaten bewirkt und überprüft werden, die insbesondere charakteristisch für eine Echtheit des Motivs sein können. Integritätsmerkmale wie z.B. Hologramme oder Wasserzeichen des abgebildeten Identifikations-Dokuments können derart überprüft werden.

Mittels geeigneter technischer Funktionen kann darüber hinaus sichergestellt werden, dass es dem Benutzer nicht oder nur eingeschränkt möglich ist, diese Bildparameter selbständig zu verändern, d. h. unabhängig von den Steuerdaten festzulegen. In anderen Worten kann es nicht oder nur eingeschränkt möglich sein, das Erfassen der ersten Bilddaten und/oder das Erfassen der zweiten Bilddaten abhängig von dem Endgerät und unabhängig von den empfangenen Validierungsdaten und/oder von den empfangenen Steuerdaten durchzuführen. Dies kann insbesondere eine Sicherheit gegenüber Täuschungen und/oder Fälschungen beim Identifizieren des Benutzers erhöhen.

Der Identifizierungs-Server kann eine Kommunikationsschnittstelle umfassen, wobei die Kommunikationsschnittstelle eingerichtet ist, um erste Bilddaten von einem Endgerät eines Benutzers zu empfangen und um zweite Bilddaten von dem Endgerät zu empfangen. Die ersten Bilddaten bilden ein Identifizierungs-Dokument mit einem Lichtbild des Benutzers ab. Die zweiten Bilddaten bilden eine Gesichtspartie des Benutzers ab. Der Identifizierungs-Server kann weiterhin einen Prozessor umfassen, der eingerichtet ist, um den Benutzer zu identifizieren, wobei das Identifizieren umfasst: Vergleichen der ersten Bilddaten mit den zweiten Bilddaten, um eine Ähnlichkeit des Lichtbilds des Benutzers aus den ersten Bilddaten mit der Gesichtspartie des Benutzers aus den zweiten Bilddaten zu bestimmen; und Bestimmen von Identifizierungs-Daten des Benutzers aus den ersten Bilddaten anhand des Identifizierungs-Dokuments.

Der Identifizierungs-Server kann eingerichtet sein, um das Verfahren zum Identifizieren eines Benutzers auszuführen.

Gemäß einem weiteren Aspekt betrifft die Erfindung ein System zum Identifizieren eines Benutzers gemäß Anspruch 11. Das System umfasst ein Endgerät eines Benutzers, einen Identifizierungs-Server und einen weiteren Server. Der Identifizierungs-Server umfasst eine Kommunikationsschnittstelle, wobei die Kommunikationsschnittstelle eingerichtet ist, um erste Bilddaten von dem Endgerät eines Benutzers zu empfangen und um zweite Bilddaten von dem Endgerät zu empfangen. Die ersten Bilddaten bilden ein Identifizierungs-Dokument mit einem Lichtbild des Benutzers ab. Die zweiten Bilddaten bilden eine Gesichtspartie des Benutzers ab. Der Identifizierungs-Server umfasst weiterhin einen Prozessor, der eingerichtet ist, um den Benutzer zu identifizieren, wobei das Identifizieren umfasst: Vergleichen der ersten Bilddaten mit den zweiten Bilddaten, um eine Ähnlichkeit des Lichtbilds des Benutzers aus den ersten Bilddaten mit der Gesichtspartie des Benutzers aus den zweiten Bilddaten zu bestimmen; und Bestimmen von Identifizierungs-Daten des Benutzers aus den ersten Bilddaten anhand des Identifizierungs-Dokuments. Der weitere Server umfasst einen Prozessor, der eingerichtet ist, um zu überprüfen, ob eine Identifizierung des Benutzers benötigt wird, wobei das Überprüfen basierend auf einer Verbindung zwischen dem weiteren Server und einem Endgerät des Benutzers stattfindet. Der weitere Server umfasst weiterhin eine Kommunikationsschnittstelle, die eingerichtet ist, um in Abhängigkeit von dem Überprüfen, eine Identifizierungs-Anfrage an den Identifizierungs-Server zu senden, und ein Identifizierungs-Ergebnis von dem Identifizierungs-Server zu empfangen.

Das System kann weiterhin eingerichtet sein, um ein Verfahren zum Identifizieren eines Benutzers gemäß einem weiteren Aspekt der Erfindung durchzuführen.

Für ein solches System können Effekte erzielt werden, die vergleichbar sind mit den Effekten, die für das Verfahren zum Identifizieren eines Benutzers gemäß einem weiteren Aspekt der vorliegenden Erfindung erzielt werden können.

Die oben dargelegten Merkmale und Merkmale, die nachfolgend beschrieben werden, können nicht nur in den entsprechenden explizit dargelegten Kombinationen verwendet werden, sondern auch in weiteren Kombinationen oder isoliert ohne den Schutzumfang der vorliegenden Erfindung zu verlassen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
FIG. 1 ein Identifizierungs-Sever-System mit einem Identifizierungs-Server und einem weiteren Server, sowie ein Benutzer-Endgerät schematisch illustriert;
FIG. 2 ein Identifizierungs-Dokument eines Benutzers illustriert;
FIG. 3 erste Bilddaten, die das Identifizierungs-Dokument abbilden, illustriert;
FIG. 4 ein Signalfluss-Diagramm für das Identifizieren eines Benutzers ist;
FIG. 5 ein Flussdiagramm eines Verfahrens zum Identifizieren eines Benutzers ist;
FIG. 6 ein Flussdiagramm ist, welches den Schritt des Identifizierens des Benutzers aus FIG. 5 näher illustriert; und
FIG. 7 ein Identifizierungs-Server-System mit einem Identifizierungs-Server und einem weiteren Server, sowie einem Benutzer-Endgerät und einem weiteren Benutzer-Endgerät schematisch illustriert.

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. in den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird.

In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden.

In den Figuren werden Techniken erläutert, welche ein Identifizieren eines Benutzers erlauben. Hierbei erfolgt das Identifizieren mit Hilfe eines Endgeräts des Benutzers und eines Identifizierungs-Server. Das Endgerät des Benutzer und der Identifizierungs-Server können sich an unterschiedlichen Orten befinden und z.B. über das Internet kommunizieren. Das Identifizieren berücksichtigt einen Vergleich eines Abbilds eines Lichtbilds des Benutzers, das von einem Identifizierungs-Dokument erhalten wird, mit einem Abbild des Benutzers selbst. Dadurch kann eine hohe Sicherheit des Identifizierens gegenüber Fälschungen, Täuschungen etc. gewährleistet werden. Außerdem kann das Identifizieren schnell und mittel Fernzugriff durchgeführt werden.

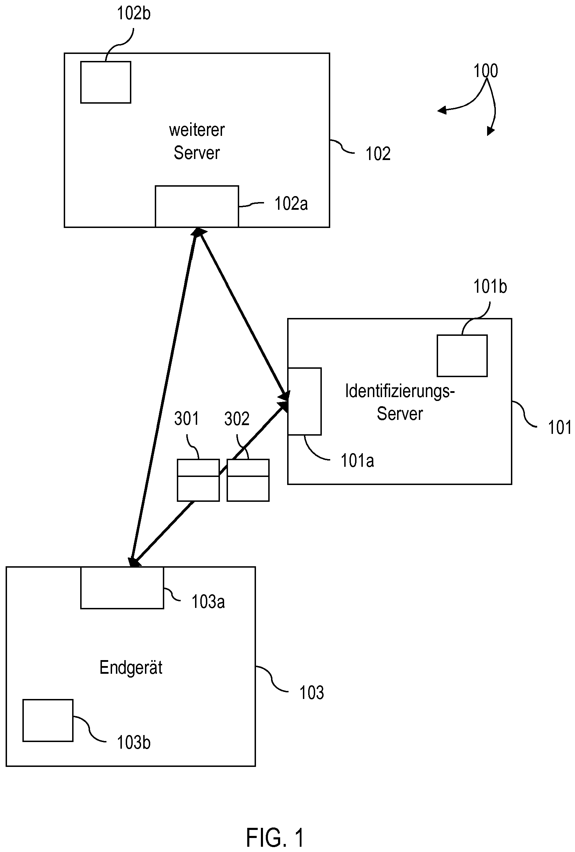

In FIG. 1 ist ein Identifizierungs-Server 101 dargestellt. Der Identifizierungs-Server 101 kommuniziert über eine Kommunikationsschnittstelle 101a mit einem Endgerät 103 eines Benutzers. Zum Beispiel kann diese Kommunikation über das Internet erfolgen. Der Identifizierungs-Server erlaubt es, eine Identifizierung des Benutzers durchzuführen. Dazu ist die Kommunikationsschnittstelle 101a eingerichtet, um erste Bilddaten 301 und zweite Bilddaten 302 von dem Endgerät 103 zu empfangen. Ein Prozessor 101b des Identifizierungs-Servers 101 ist eingerichtet, um basierend auf den ersten und zweiten Bilddaten 301, 302 das Identifizieren des Benutzers durchzuführen.

Die ersten und zweiten Bilddaten 301, 302 können z.B. ein oder mehrere Bilder, einen Film oder ähnliches beinhalten. Die ersten und zweiten Bilddaten 301, 302 können mit einer Kamera 103b des Endgeräts 103 erfasst werden und dann über eine Kommunikationsschnittstelle 103a des Endgeräts 103 an den Identifizierungs-Server 101 gesendet werden. Das Endgerät kann z.B. ein Mobiltelefon, ein Laptop, ein Computer, eine Webcam, ein Fernseher, ein Tablet-PC oder ähnliches sein.

Weiterhin ist in FIG. 1 ein weiterer Server 102 dargestellt. Der Identifizierungs-Server 101 bildet zusammen mit dem weiteren Server 102 ein Identifizierungs-Server-System 100. Der weitere Server 102 und der Identifizierungs-Server 101 sind über die Schnittstellen 102a, 101a miteinander gekoppelt, z.B. wiederum über das Internet. Entsprechend ist der weitere Server 102 mit dem Endgerät 103 gekoppelt; dies ist jedoch optional. Z.B. könnte der weitere Server 102 alternativ oder zusätzlich eine verbindung mit einem weiteren Endgerät des Benutzers aufbauen. Der weitere Server 102 umfasst einen Prozessor 102b, der eingerichtet ist, um zu überprüfen, ob eine Identifizierung des Benutzers benötigt wird. Dieses Überprüfen kann z.B. basierend auf der Verbindung zwischen dem weiteren Server 102 und dem Endgerät 103 und / oder dem weiteren Endgerät des Benutzers stattfinden. Zum Beispiel kann der weitere Server ein Online-Shop, ein Bank-Server oder ähnliches sein und der Benutzer kann eine von dem weiteren Server 102 ermöglichte Transaktion anstreben. Diese Transaktion kann jedoch das Identifizieren des Benutzers benötigen, etwa weil sie identifikations-kritisch bzw. personen-spezifisch ist.

Wird festgestellt, dass das Identifizieren des Benutzers benötigt wird, so ist die Kommunikationsschnittstelle 102a des weiteren Servers 102 eingerichtet, um in Abhängigkeit von dem Überprüfen eine Identifizierungs-Anfrage an den Identifizierungs-Server 101 zu senden. Entsprechend ist die Kommunikationsschnittstelle 102a eingerichtet, um nach positiver oder negativer Identifizierung des Benutzers ein Identifizierungs-Ergebnis von dem Identifizierung-Server 101 zu empfangen. Basierend auf dem Identifizierungs-Ergebnis kann eine Authentifizierung des Benutzers erteilt oder verweigert werden, sodass dieses Identifizierungs-Ergebnis den weiteren Fortgang der oben erwähnten, angestrebten Transaktion bestimmen kann.

Um eine Sicherheit des Identifizierens gegenüber Fälschungen und Täuschungen zu erhöhen, ist es möglich, die Datenübertragung entlang Verbindungen zwischen den Einheiten 101, 102, 103 verschlüsselt durchzuführen. Entsprechende Techniken, etwa die Secure Sockets Layer (SSL)-Verschlüsselung, sind dem Fachmann bekannt, sodass hier keine weiteren Details genannt werden müssen.

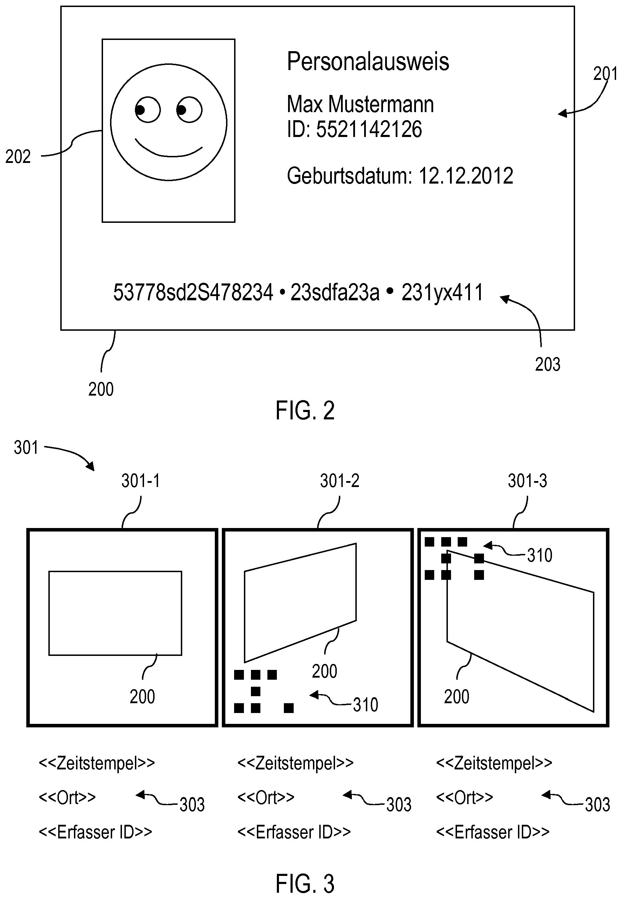

Nachfolgend werden weitere Details zu dem Identifizieren des Benutzers in Bezug auf die FIG. 2 und Folgende dargelegt. Im Kern beruht das Identifizieren des Benutzers gemäß verschiedener Szenarien auf dem Bestimmen von Identifizierungs-Daten des Benutzers, etwa Name, Alter, Anschrift usf., anhand eines Identifizierungs-Dokuments des Benutzers. Darüber hinaus wird durch einen Vergleich eines Lichtbilds des Identifizierungs-Dokuments mit einer Gesichtspartie des Benutzers verifiziert, dass das Identifizierungs-Dokument tatsächlich den Benutzer - und nicht eine andere Person - identifiziert. All dies geschieht basierend auf den ersten und zweiten Bilddaten 301, 302.

In FIG. 2 ist ein Identifizierungs-Dokument 200 dargestellt. Das Identifizierungs-Dokument 200 beinhaltet die Identifizierungs-Daten 201 des Benutzers, etwa Name und Geburtsdatum, sowie eine Seriennummer des Identifizierungs-Dokuments 200. Weiterhin weist das Identifizierungs-Dokument 200 ein Lichtbild 202 des Benutzers auf. Insbesondere bildet das Lichtbild 202 eine Gesichtspartie des Benutzers ab. Das Identifizierungs-Dokument 200 weist darüber hinaus Integritätsmerkmale 203 auf, etwa eine Prüfsumme, die aus den übrigen Angaben, insbesondere den Identifizierungs-Daten 201, gebildet wird.

In FIG. 2 ist das Identifizierungs-Dokument 200 von dem Typus Personalausweis. Es sollte jedoch verstanden werden, dass im Allgemeinen jedes andere Identifizierungs-Dokument mit Lichtbild 202 verwendet werden kann, z.B. insbesondere Pässe oder Führerscheine. Außerdem können verschiedene Identifizierungs-Dokuments 200 unterschiedliche Informationen aufweisen, insbesondere in Bezug auf die Identifizierungs-Daten 201. Je nach Art und Umfang der vorhandenen Identifizierungs-Daten 201 kann das Identifizieren basierend auf einer unterschiedlichen Informationsgrundlage geschehen. Jedoch bleiben die grundlegenden, hierin beschriebenen Techniken im Allgemeinen hiervon unberührt.

In FIG. 3 sind die ersten Bilddaten 201 dargestellt. Die ersten Bilddaten 301 bilden das Identifizierungs-Dokument 200 ab. Insbesondere beinhalten die ersten Bilddaten 300 drei Bilder 301-1, 301-2, 301-3, welche das Identifizierungs-Dokument 200 aus unterschiedlichen Perspektiven und Abständen abbilden. Darüber hinaus beinhalten zwei Bilder 301-2, 301-3 der ersten Bilddaten 301 Validierungsinformation 310, in der in FIG. 3 dargestellten Ausführungsform in der Form eines semi-transparent als Wasserzeichen überlagterten maschinenlesbaren Musters. Die Validierungsinformationen 310 sind auf die Bilder 301-2, 301-3 aufgeprägt. Weiterhin beinhalten die ersten Bilddaten 301 Meta-Daten 303, die z.B. umfassen: einen Zeitpunkt des Erfassens der Bilder 301-1, 301-2, 301-3, einen Ort des Erfassens der Bilder und eine ID des Endgeräts, mit dem die Bilder 301-1, 301-2, 301-3 erfasst wurde. Zum Beispiel kann der Ort, wie er in den Meta-Daten 303 spezifiziert ist, einen Längen- und/oder Breitengrad spezifizieren.

Damit die Validierungsinformation 310 in den ersten Bilddaten 301 beinhaltet werden kann, können z.B. entsprechende Validierungsdaten auf dem Identifizierungs-Server 101 erzeugt werden und an das Endgerät 103 gesendet werden. Dadurch, dass die Validierungsdaten und die daraus abgeleiteten, in den ersten Bilddaten 301 beinhalteten Validierungsinformationen 310 erst im Rahmen des Identifizierens erzeugt werden, d. h. in einem engen zeitlichen Kontext erzeugt werden, kann eine Aktualität der ersten Bilddaten 301 sichergestellt werden. Insbesondere kann vermieden werden, dass der Benutzer vorgefertigte erste Bilddaten 301 verwendet.

Weiterhin ist es möglich, Steuerdaten auf dem Identifizierungs-Server 101 zu erzeugen und diese an das Endgerät 103 zu senden. Die Steuerdaten können das Endgerät 103 instruieren, die ersten Bilddaten 301 mit einer bestimmten Abfolge von Bildparametern zu erfassen, so wie z.B. Anzahl von Bildern, Belichtungsparametern, Blitzfunktion, und Bildauflösung festlegen. Im Fall der FIG. 3 wurde mittels der Steuerdaten festgelegt, dass eine Anzahl von drei Bildern 301-1, 301-2, 301-3 erfasst werden soll. Es ist z.B. möglich, dass das erste Bild 301-1 eine Überbelichtung von z.B. zwei Blendenstufen aufweist, das zweite Bild 301-2 eine Unterbelichtung von zwei Blendenstufen aufweist und das dritte Bild 301-3 eine Normalbelichtung mit zusätzlich ausgelöstem Blitz aufweist. Dies ist rein illustrativ und nicht beschränkend. Eine andere Wahl und Kombination von Bildparametern ist möglich. Durch das Validieren der Bildparameter mittels der Steuerdaten ist es insbesondere möglich, zu vermeiden, dass der Benutzer vorgefertigte erste Bilddaten 301 für die Identifizierung verwendet. Es kann nämlich möglich sein, im Rahmen des Identifizerens auf dem Identifizierungs-Server 101 zu überprüfen bzw. zu validieren, ob die Bilder 301-1, 301-2, 301-3 der ersten Bilddaten optische Eigenschaften aufweisen, die durch die Bildparameter charakterisiert sind.

In dem Szenario, wie es in Bezug auf die FIG. 3 diskutiert wird, wurden weiterhin im Rahmen der Validierungsdaten an den Benutzer Befehle übertragen, mit welcher Position und Entfernung die Bilder 301-1, 301-2, 301-3 des Identifizierungs-Dokuments 200 zu erfassen sind. Deshalb weisen die Bilder 301-1, 301-2, 301-3 unterschiedliche Perspektiven des Identifizierungs-Dokuments 200 auf. Diese unterschiedlichen Perspektiven können als implitzit in den Bilderdaten 301 beinhaltete Validierungsinformation basierend auf den Validierungsdaten validiert werden.

Obenstehend wurden in Bezug auf die FIG. 3 Techniken im Zusammenhang mit den ersten Bilddaten 301 erläutert. Es sollte jedoch verstanden werden, dass alternativ oder zusätzlich entsprechende Techniken auch im Zusammenhang mit den zweiten Bilddaten 302 analog angewendet werden können. Insbesondere kann es alternativ oder zusätzlich möglich sein, Validierungsinformation 310 in den zweiten Bilddaten 302 zu beinhalten. Die Steuerdaten können auch in Bezug auf die zweiten Bilddaten 302 angewendet werden.

Mittels geeigneter Techniken werden im Rahmen des Identifizierens die Identifizierungs-Daten 201 des Identifizierungs-Dokuments 200 aus den ersten Bilddaten 301 bestimmt, etwa mittels Texterkennung. Außerdem wird das Lichtbild 202 des Identifizierungs-Dokuments 200 mit der Gesichtspartie des Benutzers verglichen, was anhand der ersten und zweiten Bilddaten 301, 302 möglich ist. Bei einer ausreichend guten Übereinstimmung zwischen dem Lichtbild 202 und der Gesichtspartie, kann angenommen werden, dass das Identifizierungs-Dokument 200 tatsächlich dem Benutzer gehört und dieser durch die Identifizierungs-Daten 201 identifiziert ist.

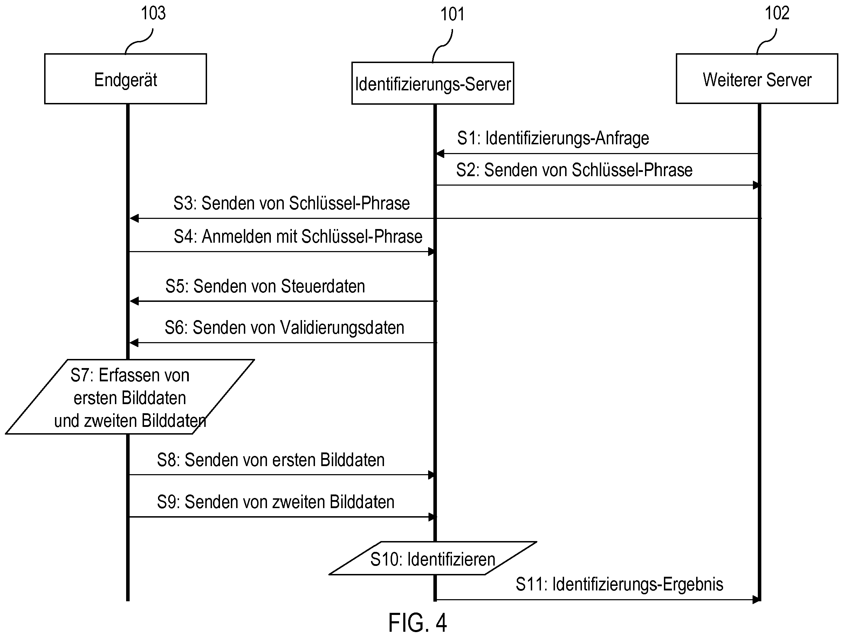

In FIG. 4 ist der Signalfluss für eine Identifikation des Benutzers mittels erfindungsgemäßen Techniken dargestellt. Zunächst sendet der weitere Server 102 in Schritt S1 eine Identifizierungs-Anfrage an den Identifizierungs-Server 101. Dies kann z.B. in Folge der festgestellten Notwendigkeit einer Identifizierung des Benutzers geschehen. Zum Beispiel kann der Benutzer eine Transaktion, etwa einen Produktkauf oder eine Banktransaktion oder ähnliches, über den weiteren Server 102 anstreben, z.B. mittels des Endgeräts 103 oder mittels eines weiteren Endgeräts (in FIG. 4 nicht gezeigt). Wird für diese Transaktion die Identifizierung des Benutzers benötigt, so kann dies die Identifizierungs-Anfrage in Schritt S1 auslösen. Die Identifizierungs-Anfrage in Schritt S1 kann in unterschiedlichen Szenarien unterschiedlichen Informationsgehalt aufweisen. Zum Beispiel kann die Identifizierungs-Anfrage anonym ohne jegliche weitere Information zu dem Benutzer erfolgen. Es wäre aber auch möglich, dass die Identifizierungs-Anfrage bereits bestimmte, zu verifizierende Identifizierungs-Daten des Benutzers beinhaltet, also ein Identifizierungs-Kriterium spezifizieren.

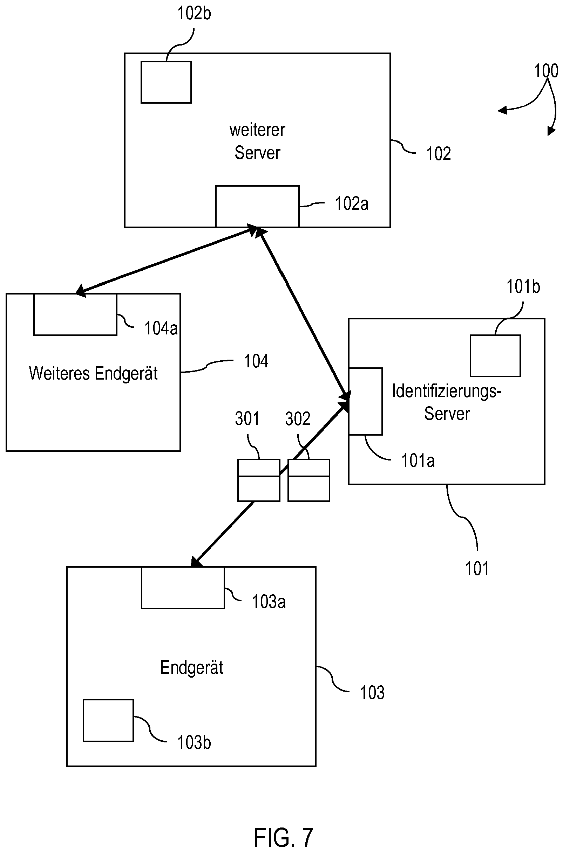

Der Identifizierungs-Server 101 sendet eine Schlüssel-Phrase an den weiteren Server 102 (Schritt S2). Der weitere Server 102 sendet die Schlüssel-Phrase anschließend z.B. an das Endgerät 103 (Schritt S4), sodass sich dieses z.B. automatisch in Schritt S4 mittels der Schlüssel-Phrase an dem Identifizierungs-Server 101 anmelden kann. Es wäre alternativ auch möglich, dass der weitere Server 102 die Schlüssel-Phrase nicht an das Endgerät 103, sondern an ein weiteres Endgerät des Benutzers sendet, etwa einen Fernseher, einen Computer, einen Laptop, an ein Mobiltelefon, einen Tablet-PC, etc. Dieses weitere Endgerät könnte die Schlüssel-Phrase an den Benutzer wiedergeben. Dann könnte der Benutzer die Schlüssel-Phrase in das Endgerät 103 z.B. manuell eingeben - d.h. die Anmeldung am Identifizierungs-Server 101 kann teil-automatisch erfolgen (siehe auch FIG. 7). Die Schlüssel-Phrase kann den bestimmten Identifizierungs-Vorgang als Token eindeutig charakterisieren, sodass Verwechslungen zwischen dem Identifizieren verschiedener Benutzer vermieden werden können.

Anschließend sendet in den Schritten S5 und S6 der Identifizierungs-Server die Steuerdaten und die Validierungsdaten an das Endgerät 103. Die Steuerdaten legen eine Abfolge und Belichtungsparameter der Bilder, die für die ersten und zweiten Bilddaten erfasst werden (Schritt S7) fest. Die Validierungsdaten spezifizieren Validierungsinformationen, die in den ersten und zweiten Bilddaten beinhaltet werden.

In den Schritten S8 und S9 werden die ersten und zweiten Bilddaten 301, 302 von dem Endgerät 103 an den Identifizierungs-Server 101 gesendet. Der Identifizierungs-Server 101 führt in Schritt S10 das Identifizieren des Benutzers basierend auf den empfangenen ersten und zweiten Bilddaten 301, 302 durch. In Schritt S11 wird das Identifizierungs-Ergebnis an den weiteren Server 102 gesendet. Das Identifizierungs-Ergebnis kann entsprechend der Identifizierungs-Anfrage aus Schritt S1 einen unterschiedlichen Informationsgehalt aufweisen. Zum Beispiel kann das Identifizierungs-Ergebnis die bestimmten Identifizierungs-Daten 201 des Benutzers beinhalten. Es wäre auch möglich, dass das Identifizierungs-Ergebnis nur bestimmte Identifizierungs-Daten beinhaltet, z.B. wie sie in der Identifizierungs-Anfrage angefragt wurden. Es wäre auch möglich, dass das Identifizierungs-Ergebnis lediglich eine positive oder negative Identifizierung des Benutzers indiziert, etwa basierend auf dem Identifizierungs-Kriterium. Z.B. kann das Identifizierungs-Kriterien. ein Mindestalter des Benutzers oder einen Wohnort des Benutzers, spezifiziereren. Dann kann das Identifizierungs-Ergebnis eine einfach Ja/Nein-Antwort darstellen. In Abhängigkeit des Identifizierungs-Ergebnisses kann eine Authorisierung der von dem Benutzer angestrebten Transaktion erfolgen.

Es wäre optional weiterhin möglich, dass im Anschluss an das Identifizieren (Schritt S10) ein Benutzer-Passwort an den weiteren Server 102 gesendet wird. Z.B. kann das Benutzer-Passwort auf dem Endgerät 103 erzeugt werden, etwa durch Benutzereingabe. Dann kann das Benutzer-Passwort von dem Endgerät 103 an den Identifizierungs-Server 101 gesendet werden und von dort, z.B. im Rahmen des Identifizierungs-Ergebnisses, an den weiteren Server 102. Der weitere Server 102 kann das Benutzer-Passwort im Zusammenhang mit dem Benutzer und / oder den identifizierten Identifizierungs-Daten speichern. Optional kann das Endgerät 103 das Passwort auch speichern.

Dies kann ein späteres, erneutes Identifizieren des Benutzers basierend auf dem gespeicherten Benutzer-Passwort ermöglichen. In anderen Worten kann es deshalb bei einem späteren erneuten Identifizieren entbehrlich sein, die ersten und zweiten Bilddaten 301, 302 etc. erneut zu übertragen. Es kann vielmehr ausreichend sein, lediglich das Identifizeren lediglich basierend auf dem Benutzer-Passwort durchzuführen. Hierzu wäre es optional auch möglich, dass das Benutzer-Passwort auf dem Endgerät 103 für das spätere, z.B. automatische Identifizieren gespeichert wird. Ein besonders schnelles und einfaches erneutes Identifizieren basierend auf dem Benutzer-Passwort wird derart möglich.

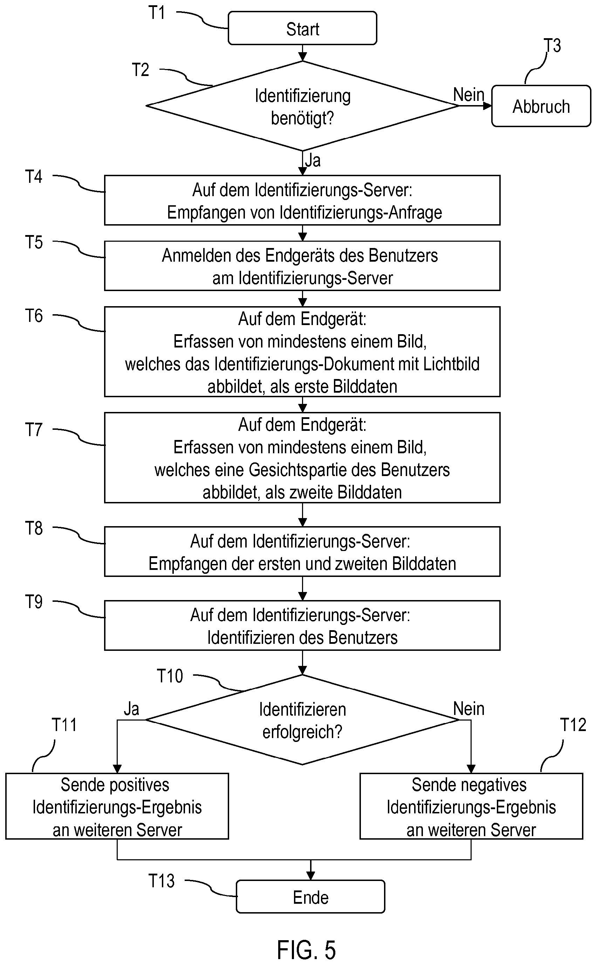

In FIG. 5 ist ein Flussdiagramm eines Verfahrens zum Identifizieren des Benutzers dargestellt. Das Verfahren beginnt in Schritt T1. In Schritt T2 wird überprüft, ob die Identifizierung des Benutzers benötigt wird. Wird die Identifizierung des Benutzers nicht benötigt, so endet das Verfahren in Schritt T3. Andernfalls empfängt der Identifizierungs-Server 101 die Identifizierungs-Anfrage von dem weiteren Server 102 (Schritt T4). In Schritt T5 erfolgt das Anmelden des Endgeräts 103 an dem Identifizierungs-Server 101. Dies kann z.B. mittels der Schlüssel-Phrase erfolgen.

In den Schritten T6 und T7 werden auf dem Endgerät 103 die ersten und zweiten Bilddaten 301, 302 erfasst. Alternativ könnte das Endgerät 103 eine externe Einheit, etwa einen Fernseher oder ein Webcam oder ähnliches, zum Erfassen der ersten und zweiten Bilddaten 301, 302 steuern.

Anschließend werden die ersten und zweiten Bilddaten 301, 302 auf dem Identifizierungs-Server empfangen (Schritt T8) und es erfolgt das Identifizieren des Benutzers (Schritt T9). In Abhängigkeit davon, ob das Identifizieren erfolgreich ist (Schritt T10) wird in Schritt T11 ein positives Identifizierungs-Ergebnis von dem Identifizierungs-Server 101 an den weiteren Server 102 gesendet, oder in Schritt T12 ein negatives Identifizierungs-Ergebnis von dem Identifizierungs-Server 101 an den weiteren Server 102 gesendet. Das Verfahren endet in Schritt T13.

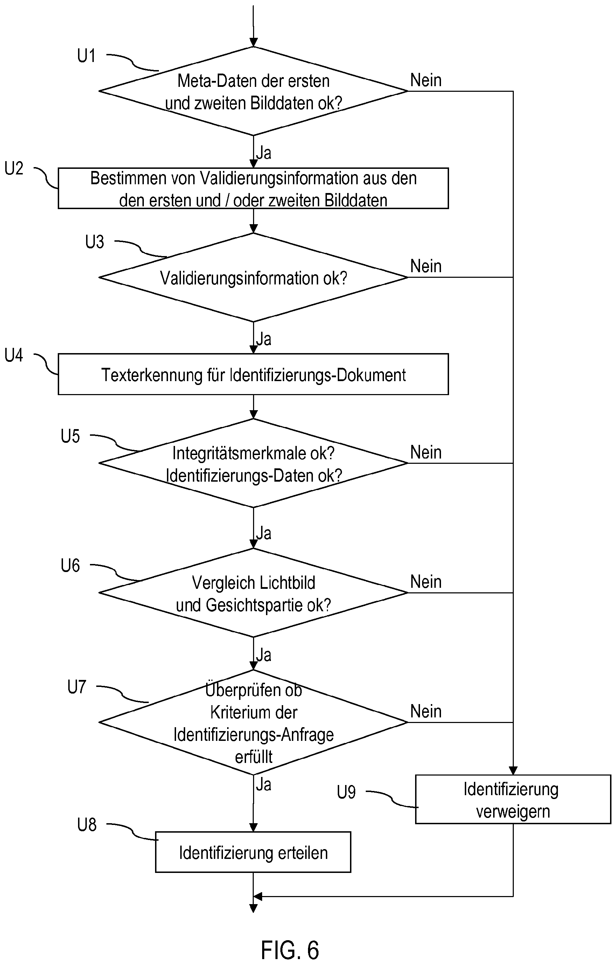

In FIG. 6 sind nachfolgend weitere Details zu dem Schritt T9 der FIG. 5, dem Identifizieren des Benutzers auf dem Identifizierungs-Server 101 dargestellt.

Zunächst werden in Schritt U1 die Meta-Daten der ersten und zweiten Bilddaten 301, 302 auf Validität überprüft. Dies kann z.B. bedeuten, dass überprüft wird, ob die ersten und zweiten Bilddaten 301, 302 Bilder beinhalten, die innerhalb einer bestimmten Zeitspanne vor der Ist-Zeit, bei der Schritt U1 ausgeführt wird, erfasst wurden, bzw. nicht älter als ein bestimmter maximaler Zeitwert sind. Es wäre auch möglich zu überprüfen, ob die verschiedenen Bilder der ersten und zweiten Bilddaten 301, 302 nicht an unterschiedlichen Orten erfasst wurden und/oder von ein und demselben Endgerät 103 erfasst wurden. Wird in Schritt U1 eine fehlende Validität der Meta-Daten 303 der ersten und zweiten Bilddaten 301, 302 festgestellt, so wird in Schritt U9 die Identifizierung verweigert.

Andernfalls wird in Schritt U2 die Validierungsinformation 310 aus den ersten und/oder zweiten Bilddaten 301, 302 bestimmt. Schritt U2 kann z.B. das Anwenden von Bildsegmentierungstechniken und / oder Texterkennung beinhalten oder kann das automatische Auslesen bestimmter Bereiche der ersten und/oder zweiten Bilddaten 301, 302 basierend auf den auf dem Identifizierungs-Server 101 erzeugten Validierungsdaten beinhalten.

In Schritt U3 wird die Integrität der Validierungsinformation überprüft. Sind die Validierungsinformationen nicht, nicht vollständig oder modifiziert (z.B. basierend auf Prüfsummen und/oder den Validierungsdaten bestimmbar) vorhanden, so kann in Schritt U9 die Identifizierung verweigert werden.

Andernfalls kann in Schritt U4 eine Texterkennung für das Identifizierungs-Dokument 200 durchgeführt werden, um z.B. insbesondere die Integritätsmerkmale 203 des Identifizierungs-Dokuments 200 und / oder die Identifizierungs-Daten 201 auszulesen. In Schritt U5 können die Integritätsmerkmale 203 validiert werden. Dies kann basierend auf der in Schritt U4 aufgeführten Texterkennung erfolgen und kann optional oder alternativ Techniken der Bildsegmentierung beinhalten - z.B. um Wasserzeichen oder Hologramme zu erkennen. Die Integritätsmerkmale 203 können z.B. über Prüfsummen eine Korrektheit der ebenfalls bestimmten Identifzierungs-Daten 201 kennzeichnen.

Sind in Schritt U5 die Integritätsmerkmale 203 und / oder die Identifizierungs-Daten 201 validiert, so kann in Schritt U6 ein Vergleich des Lichtbilds 202 des Identifizierungs-Dokuments 200 mit der in den zweiten Bilddaten 302 abgebildeten Gesichtspartie des Benutzers durchgeführt werden. Schritt U6 kann z.B. automatisch, teil-automatisch oder manuell durchgeführt werden. Wird Schritt U6 automatisch oder teil-automatisch durchgeführt, so kann Schritt U6 Techniken der Bildsegmentierung und/oder Bildregistrierung beinhalten. Es kann ein Ähnlichkeitswert zwischen dem Lichtbild 202 und der in den zweiten Bilddaten 302 abgebildeten Gesichtspartie des Benutzers bestimmt werden und überprüft werden, ob der Ähnlichkeitswert genügend hoch ist. Wird keine genügend große Ähnlichkeit in Schritt U6 festgestellt, so kann in Schritt U9 die Identifizierung verweigert werden.

Optional könnten in Schritt U6 auch die Integritätsmerkmale 203 durch manuelle Augenschein-Einnahme überprüft werden, z.B. auf Vorhandensein und / oder Integrität. Dazu könnte eine Person die ersten Bilddaten 301 überprüfen.

Andernfalls kann in Schritt U7 festgestellt werden, ob ein Kriterium der Identifizierungs-Anfrage erfüllt ist. Zum Beispiel kann die Identifizierungs-Anfrage das Kriterium beinhalten, ob der Benutzer bereits das 18. Lebensjahr vollendet hat, also volljährig ist. Basierend auf den bestimmten Identifizierungs-Daten 201 kann überprüft werden, wie alt der Benutzer ist und in Schritt U7 das bestimmte Alter mit dem Kriterium der Identifizierungs-Anfrage verglichen werden. Ist das Kriterium der Identifizierungs-Anfrage nicht erfüllt, so kann wiederum in Schritt U9 die Identifizierung verweigert werden. Andernfalls kann in Schritt U8 die Identifizierung erteilt werden.

Es sollte verstanden werden, dass die verschiedenen voranstehenden, in Bezug auf die FIG. 6 beschriebenen Schritte nicht alle notwendig sind bzw. optional durchgeführt werden können. Zum Beispiel kann es entbehrlich sein, in Schritt U5 die Integritätsmerkmale zu bestimmen. Entsprechend kann es entbehrlich sein, die Meta-Daten 303 in Schritt U1 zu überprüfen bzw. die Validierungsinformation 310 in den verschiedenen Schritten U2 und U3 zu bestimmen und zu überprüfen. Darüber hinaus ist die Reihenfolge der verschiedenen Schritte nicht besonders limitiert. Es wäre z.B. möglich gleich zu Beginn den Schritt U6 durchzuführen und die anderen Identifizierungs-Schritte erst nachfolgend - andere Anordnungen der Schritte sind möglich.

In FIG. 7 ist ein weiteres Szenario dargestellt, bei dem im Vergleich zu dem in FIG. 1 dargestellten Szenario der weitere Server 102 keine direkte Verbindung mit dem Endgerät 103 des Benutzers aufbaut. Vielmehr steht der weitere Server 102 in Kommunikationsverbindung mit dem weiteren Endgerät 104 des Benutzers, z.B. mittels der Kommunikationsschnitstelle 104a über das Internet.

Ein denkbares Szenario wäre, dass der Benutzer z.b. die identifikations-kritische Transaktion über die Verbindung zwischen dem weiteren Endgerät 104 und dem weiteren Server 102 anstrebt bzw. auslöst. Ein Beispiel wäre, dass das weitere Endgerät 104 ein Fernseher mit Videostreaming-Funktionalität (engl. Video-On-Demand) ist und der Benutzer einen Film mit alterskritischem Inhalt auf dem Fernseher abrufen möchte. Zur Identifizierung des Benutzers, insbesondere mit Alters-Authentifizierung, kann die Schlüssel-Phrase auf dem weiteren Endgerät 104, hier dem Fernseher wiedergegeben werden. Der Benutzer kann sich dann mit der Schlüssel-Phrase über das Endgerät 103, etwa einem Computer, Laptop, Mobiltelefon, etc. auf dem Identifikations-Server 101 anmelden. Dazu kann er z.B. die an das weitere Endgerät 104 gesendete Schlüssel-Phrase auf dem weiteren Endgerät 103 eingeben, sodass dieses die Verbindung mit dem Identifizierungs-Server 101 aufbauen kann.

Aus dem obenstehenden geht hervor, dass die Techniken zum Identifizieren des Benutzers eine sichere, schnelle und ortsungebundene Identifizierung ermöglichen. Deshalb können solche Techniken in vielfachen Bereichen Anwendung finden, etwa bei Online-Käufen, Banktransaktionen, Benutzer-Logins auf Webseiten, Authorisierung von Transaktionen usf.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

## Patentansprüche

1. Verfahren zum Identifizieren eines Benutzers,
wobei das Verfahren umfasst:
- Empfangen von ersten Bilddaten (301) von einem Endgerät (103) des Benutzers auf einem Identifizierungs-Server (101),
wobei die ersten Bilddaten (301) ein Identifizierungs-Dokument (200) mit einem Lichtbild (202) des Benutzers abbilden,
- Empfangen von zweiten Bilddaten (302) von dem Endgerät (103) des Benutzers auf dem Identifizierungs-Server (101),
wobei die zweiten Bilddaten (302) eine Gesichtspartie des Benutzers abbilden,
- Identifizieren des Benutzers, wobei das Identifizieren umfasst:
- Vergleichen der ersten Bilddaten (301) mit den zweiten Bilddaten (302), um eine Ähnlichkeit des Lichtbilds (202) des Benutzers aus den ersten Bilddaten (301) mit der Gesichtspartie des Benutzers aus den zweiten Bilddaten (302) zu bestimmen,
- Bestimmen von Identifizierungs-Daten (201) des Benutzers aus den ersten Bilddaten (301) anhand des Identifizierungs-Dokuments (200),
wobei das Verfahren weiterhin umfasst:
Empfangen einer Identifizierungs-Anfrage von einem weiteren Server (102) auf dem Identifizierungs-Server (101),
in Reaktion auf das Empfangen der Identifizierungs-Anfrage, Senden einer Schlüssel-Phrase von dem Identifizierungs-Server (101) an den weiteren Server (102),
als Reaktion auf die empfangene Schlüssel-Phrase sendet der weitere Server (102) die Schlüssel-Phrase an ein weiteres Endgerät (104) des Benutzers oder an das Endgerät (103), und
das Endgerät (103) baut eine Verbindung mit dem Identifizierungs-Server (101) unter Verwendung der Schlüssel-Phrase auf.

2. Verfahren nach Anspruch 1,
wobei das Verfahren weiterhin umfasst:
- Erzeugen von Validierungsdaten auf dem Identifizierungs-Server (101),
- Senden der Validierungsdaten von dem Identifizierungs-Server (101) an das Endgerät (103),
wobei die Validierungsdaten es dem Endgerät (103) ermöglichen, zusätzliche Validierungsinformation (310) in den ersten Bilddaten (301) und/oder in den zweiten Bilddaten (302) zu beinhalten,
wobei das Identifizieren weiterhin umfasst:
- Bestimmen der Validierungsinformation (310) aus den ersten Bilddaten (301) und/oder aus den zweiten Bilddaten (302),
- Validieren der bestimmten Validierungsinformation (310) anhand der erzeugten Validierungsdaten.

3. Verfahren nach Anspruch 2,
wobei die Validierungsinformation (310) mindestens eines der folgenden Elemente umfasst:
- ein Wasserzeichen, das den ersten Bilddaten (301) und/oder den zweiten Bilddaten (302) aufgeprägt ist,
- einen alphanumerischen Code, der in den ersten Bilddaten (301) und/oder den zweiten Bilddaten (302) abgebildet ist,
- ein maschinenlesbares Muster, das in den ersten Bilddaten (301) und/oder in den zweiten Bilddaten (302) abgebildet ist,
- eine Position und/oder Entfernung einer die Bilddaten erfassenden Kamera zu dem Identifizierungs-Dokument (200) und/oder zu der Gesichtspartie,
- einen alphanumerischen Code, der in den ersten Bilddaten (301) und/oder den zweiten Bilddaten (302) abgebildet ist und der einen Zeitpunkt oder eine Zeitspanne beinhaltet.

4. Verfahren nach einem der voranstehenden Ansprüche,
wobei das Verfahren weiterhin umfasst:
- Erzeugen von Steuerdaten auf dem Identifizierungs-Server (101),
- Senden der Steuerdaten von dem Identifizierungs-Server (101) an das Endgerät (103),
wobei die Steuerdaten das Endgerät (103) instruieren, die ersten Bilddaten (301) und/oder die zweiten Bilddaten (302) mit bestimmten Bildparametern zu erfassen,
wobei die Bildparameter vorzugsweise aus folgender Gruppe ausgewählt sind:
- Anzahl von Bildern;
- Belichtungsparameter;
- Blitzfunktion;
- Bildauflösung.

5. Verfahren nach einem der voranstehenden Ansprüche,
wobei die ersten Bilddaten (301) und/oder die zweiten Bilddaten (302) aus folgender Gruppe ausgewählt sind:
- ein Bild (301 -1 , 301 -2, 301 -3);
- einen Film;
- mindestens zwei Bilder (301 -1 , 301 -2, 301 -3) oder zwei Filme, die sequentiell zu unterschiedlichen Zeitpunkten erfasst sind;
- mindestens zwei Bilder (301 -1 , 301 -2, 301 -3) oder zwei Filme, die mit jeweils unterschiedlichen Belichtungsparametern und/oder Blitzfunktionen erfasst sind,
- mindestens zwei Bilder (301 -1 , 301 -2, 301 -3) oder Filme, die das Identifizierungs-Dokument (200) oder die Gesichtspartie aus unterschiedlichen Perspektiven und/oder Abständen abbilden.

6. Verfahren nach einem der voranstehenden Ansprüche,
weiterhin umfassend:
- in Reaktion auf das Identifizieren, Senden eines Identifizierungs-Ergebnisses von dem Identifizierungs-Server (101) an den weiteren Server (102) unter Bezugnahme auf die empfangene Identifizierungs-Anfrage.

7. Verfahren nach Anspruch 6,
wobei das Identifizierungs-Ergebnis und/oder die Identifizierungs-Anfrage mindestens eines der folgenden Elemente umfasst:
- einen Indikator, der ein positives oder ein negatives Identifizierungs-Ergebnis indiziert,
- einen Namen des Benutzers,
- einen Vornamen und/oder einen Nachnamen des Benutzers, - ein Geburtsdatum und/oder ein Alter des Benutzers,
- einen Indikator, der indiziert, ob das Alter des Benutzers größer als ein Altersschwellenwert ist,
- einen Wohnort des Benutzers,
- eine Adresse des Benutzers,
- eine Postleitzahl des Wohnorts des Benutzers,
- anonymisierte Identifikationsdaten des Benutzers,
- eine Klassifikation von Identifikationsdaten des Benutzers in Bezug auf eine Referenzklassifikation,
- ein Benutzer-Passwort.

8. Verfahren nach einem der Ansprüche 6 oder 7,
wobei das Identifizieren des Benutzers weiterhin umfasst:
- Vergleichen der bestimmten Identifizierungs-Daten (201) mit der Identifizierungs-Anfrage.

9. Verfahren nach einem der voranstehenden Ansprüche,
wobei das Identifizieren weiterhin mindestens einen der folgenden Schritte umfasst:
- Verifizieren von Integritätsmerkmalen des Identifizierungs-Dokuments (200) aus den ersten Bilddaten (301),
wobei die Integritätsmerkmale Prüfsummen und/oder Wasserzeichen und/oder Hologramm-Abbildungen und/oder biometrische Daten beinhalten,
- Verifizieren von Meta-Daten, die mit den ersten Bilddaten (301) und/oder mit den zweiten Bilddaten (302) empfangen werden,
wobei die Meta-Daten einen Aufnahmezeitpunkt der ersten Bilddaten (301) und/oder einen Aufnahmezeitpunkt der zweiten Bilddaten (302) und/oder eine Identifikation des Endgeräts (103) und/oder eine Aufnahmeposition der ersten Bilddaten (301) und/oder eine Aufnahmeposition der zweiten Bilddaten (302) umfassen.

10. Verfahren nach einem der voranstehenden Ansprüche,
wobei das Verfahren umfasst:
- Erfassen der ersten Bilddaten (301) mittels einer Kamera,
- Erfassen der zweiten Bilddaten (302) mittels der Kamera,
- Senden der ersten Bilddaten (301) und der zweiten Bilddaten (302) von dem Endgerät (103) des Benutzers an den Identifizierungs-Server (101) für das Identifizieren des Benutzers.

11. System zum Identifizieren eines Benutzers,
wobei das System umfasst:
- ein Endgerät (103) eines Benutzers,
- einen Identifizierungs-Server (101), wobei der Identifizierungs-Server (101) umfasst:
- eine Kommunikationsschnittstelle (101a), wobei die Kommunikationsschnittstelle (101 a) eingerichtet ist, um erste Bilddaten (301) von dem Endgerät (103) zu empfangen und um zweite Bilddaten (302) von dem Endgerät (103) zu empfangen,
wobei die ersten Bilddaten (301) ein Identifizierungs-Dokument (200) mit einem Lichtbild (202) des Benutzers abbilden,
wobei die zweiten Bilddaten (302) eine Gesichtspartie des Benutzers abbilden,
- einen Prozessor (101b), der eingerichtet ist, um den Benutzer zu identifizieren, wobei das Identifizieren umfasst:
- Vergleichen der ersten Bilddaten (301) mit den zweiten Bilddaten (302), um eine Ähnlichkeit des Lichtbilds (202) des Benutzers aus den ersten Bilddaten (301) mit der Gesichtspartie des Benutzers aus den zweiten Bilddaten (302) zu bestimmen,
- Bestimmen von Identifizierungs-Daten (201) des Benutzers aus den ersten Bilddaten (301) anhand des Identifizierungs-Dokuments (200),
wobei das System weiterhin umfasst
- einen weiteren Server (102), der umfasst:
- einen Prozessor (102b), der eingerichtet ist, um zu überprüfen, ob eine Identifizierung des Benutzers benötigt wird, wobei das Überprüfen basierend auf einer Verbindung zwischen dem weiteren Server (102) und dem Endgerät (103) des Benutzers stattfindet,
- eine Kommunikationsschnittstelle (102a), die eingerichtet ist, um in Abhängigkeit von dem Überprüfen, eine Identifizierungs-Anfrage an den Identifizierungs-Server (101) zu senden, und ein Identifizierungs-Ergebnis von dem Identifizierungs-Server (101) zu empfangen,
wobei der Identifizierungs-Server (101) eingerichtet ist, in Reaktion auf das Empfangen der Identifizierungs-Anfrage eine Schlüssel-Phrase an den weiteren Server (102) zu senden,
wobei der weitere Server (102) eingerichtet ist, als Reaktion auf die empfangene Schlüssel-Phrase die Schlüssel-Phrase an ein weiteres Endgerät (104) des Benutzers oder an das Endgerät (103) zu senden,
wobei das Endgerät (103) eingerichtet ist, eine Verbindung mit dem Identifizierungs-Server (101) unter Verwendung der Schlüssel-Phrase aufzubauen.

12. System nach Anspruch 11,
wobei das System eingerichtet ist, um ein Verfahren nach einem der Ansprüche 1 - 10 durchzuführen.

## Claims

1. A method for identifying a user
wherein the method comprises:
- receiving first image data (301) from a terminal (103) of the user at an identification server (101),
wherein the first image data (301) show an identification document (200) having a photograph (202) of the user,
- receiving second image data (302) from the terminal (103) of the user at the identification server (101),
wherein the second image data (302) show a facial region of the user,
- identifying the user, wherein said identifying comprises:
- comparing the first image data (301) to the second image data (302) in order to determine a similarity of the photograph (202) of the user from the first image data (301) with the facial region of the user from the second image data (302),
- determining identification data (201) of the user from the first image data (301) based on the identification document (200),
wherein the method further comprises:
receiving an identification request from a further server (102) at the identification server (101),
in response to receiving the identification request, sending a key phrase from the identification server (101) to the further server (102),
in response to the received key phrase, the further server (102) sends the key phrase to a further terminal (104) of the user or to the terminal (103), and
the terminal (103) establishing a connection to the identification server (101) using the key phrase.

2. The method according to claim 1,
wherein the method further comprises:
- generating validation data on the identification server (101),
- sending the validation data from the identification server (101) to the terminal (103),
wherein the validation data enable the terminal (103) to include additional validation information (310) in the first image data (301) and/or in the second image data (302),
wherein identifying further comprises:
- determining the validation information (310) from the first image data (301) and/or the second image data (302),
- validating the determined validation information (310) based on the generated validation data.

3. The method according to claim 2,
wherein the validation information (310) comprises at least one of the following elements:
- a watermark imprinted on the first image data (301) and/or on the second image data (302),
- an alphanumeric code shown in the first image data (301) and/or in the second image data (302),
- a machine readable pattern shown in the first image data (301) and/or in the second image data (302),
- a position and/or distance of a camera capturing the image data with respect to the identification document (200) and/or the facial region,
- an alphanumeric code shown in the first image data (301) and/or in the second image data (302) and comprising a time stamp or a time duration.

4. The method according to any of the preceding claims,
wherein the method further comprises:
- creating control data on the identification server (101),
- sending the control data from the identification server (101) to the terminal (103),
wherein the control data instruct the terminal (103) to capture the first image data (301) and/or in the second image data (302) with certain image parameters,
wherein the image parameters are preferably selected from the following group:
- count of images;
- exposure parameters;
- flash functionality;
- image resolution.

5. The method according to any of the preceding claims,
wherein the first image data (301) and the second image data (302) are selected from the following group:
- an image (301-1, 301-2, 301-3);
- a movie;
- at least two images (301-1, 301-2, 301-3) or two movies that are captured sequentially at different points in time;
- at least two images (301-1, 301-2, 301-3) or two movies that are respectively captured with different exposure parameters and/or flash functionality,
- at least two images (301-1, 301-2, 301-3) or two movies that show the identification document (200) or the facial region from different perspectives and/or distances.

6. The method according to any of the preceding claims,
wherein the method further comprises:
- in response to said step of identifying, sending an identification result with reference to the received identification request from the identification server (101) to the further server (102).

7. The method according to claim 6,
wherein the identification result and/or the identification request comprise at least one of the following elements:
- an indicator indicating a positive or a negative identification result,
- a name of the user,
- a first name and/or a surname of the user,
- a date of birth and/or an age of the user,
- an indicator indicating if the age of the user is greater than an age threshold,
- a place of residence of the user,
- an address of the user,
- a ZIP code of the place of residence of the user,
- anonymised identification data of the user,
- a classification of identification data of the user with reference to a reference classification,
- a user password.

8. The method according to any of the claims 6 or 7,
wherein said identifying of the user further comprises:
- comparing the determined identification data (201) with the identification request.

9. The method according to any of the preceding claims,
wherein said identifying further comprises at least one of the following steps:
- verifying integrity characteristics of the identification document (200) from the first image data (301),
wherein the integrity characteristics include checksums and/or watermarks and/or holographic images and/or biometrical data,
- verifying meta data received with the first image data (301) and/or with the second image data (302),
wherein the meta data comprise a time of capturing the first image data (301) and/or a time of capturing the second image data (302) and/or an identification of the terminal (103) and/or a capturing position of the first image data (301) and/or a capturing position of the second image data (302).

10. The method according to any of the preceding claims,
wherein the method comprises:
- capturing the first image data (301) by means of a camera,
- capturing the second image data (302) by means of the camera,
- sending the first image data (301) and the second image data (302) from the terminal (103) of the user to the identification server (101) for identifying the user.

11. A system for identifying a user,
wherein the system comprises:
- a terminal (103) of a user,
- an identification server (101), wherein the identification server (101) comprises:
- a communication interface (101a), wherein the communication interface (101a) is configured to receive first image data (301) from the terminal (103) and to receive second image data (302) from the terminal (103),
- wherein the first image data (301) show an identification document (200) with a photograph (202) of the user,
wherein the second image data (302) show a facial region of the user,
- a processor (101b) configured to identify the user, with said identifying comprising:
- comparing the first image data (301) with the second image data (302) to determine a similarity of the photograph (202) of the user from the first image data to the facial region of the user from the second image data (302),
- determining identification data (201) of the user from the first image data (301) on the basis of the identification document (200),
wherein the system further comprises:
- a further server (102), which comprises:
- a processor (102b) configured to check if an identification of the user is required, wherein the check takes place based on a connection between the further server (102) and the terminal (103) of the user,
- a communication interface (102a) configured to send, depending on the check, an identification request of the identification server (101), and to receive an identification result from the identification server (101),
wherein the identification server (101) is configured to send a key phrase to a further server (102) in reaction to receiving the identification request,
wherein the further server (102) is configured to send the key phrase to another terminal (104) of the user or to the terminal (103) in reaction to the key phrase received,
wherein the terminal (103) is configured to establish a connection with the identification server (101) using the key phrase.

12. The system according to claim 11,
wherein the system is configured to implement a method according to any of the claims 1-10.

## Revendications

1. Procédé d'identification d'un utilisateur, **caractérisé en ce que** le procédé comprend :
- la réception de premières données d'image (301) d'un terminal (103) de l'utilisateur sur un serveur d'identification (101),
dans lequel les premières données d'image (301) reproduisent un document d'identification (200) avec une photographie (202) de l'utilisateur,
- la réception de deuxièmes données d'image (302) du terminal (103) de l'utilisateur sur le serveur d'identification (101),
dans lequel les deuxièmes données d'image (302) reproduisent une partie du visage de l'utilisateur,
- l'identification de l'utilisateur, dans lequel l'identification comprend :
- la comparaison des premières données d'image (301) avec les deuxièmes données d'image (302) pour déterminer une similitude de la photographie (202) de l'utilisateur à partir des premières données d'image (301) avec la partie du visage de l'utilisateur à partir des deuxièmes données d'image (302),
- la détermination de données d'identification (201) de l'utilisateur à partir des premières données d'image (301) à l'aide du document d'identification (200),
dans lequel le procédé comprend en outre :
la réception d'une demande d'identification d'un autre serveur (102) sur le serveur d'identification (101),
en réaction à la réception de la demande d'identification, l'envoi d'une phrase clé du serveur d'identification (101) à l'autre serveur (102),
en tant que réaction à la phrase clé reçue, l'autre serveur (102) envoie la phrase clé à un autre terminal (104) de l'utilisateur ou au terminal (103), et
le terminal (103) établit une liaison avec le serveur d'identification (101) en utilisant la phrase clé.

2. Procédé selon la revendication 1,
**caractérisé en ce que** le procédé comprend en outre :
- la génération de données de validation sur le serveur d'identification (101),
- l'envoi des données de validation du serveur d'identification (101) au terminal (103),
dans lequel les données de validation permettent au terminal (103) de contenir une information de validation (310) supplémentaire dans les premières données d'image (301) et/ou dans les deuxièmes données d'image (302),
dans lequel l'identification comprend en outre :
- la détermination de l'information de validation (310) à partir des premières données d'image (301) et/ou à partir des deuxièmes données d'image (302),
- la validation de l'information de validation (310) déterminée à l'aide des données de validation générées.

3. Procédé selon la revendication 2,
**caractérisé en ce que** l'information de validation (310) comprend au moins un des éléments suivants :
- un filigrane, qui est empreint sur les premières données d'image (301) et/ou les deuxièmes données d'image (302),
- un code alphanumérique, qui est reproduit dans les premières données d'image (301) et/ou les deuxièmes données d'image (302),
- un motif lisible par machine, qui est reproduit dans les premières données d'image (301) et/ou dans les deuxièmes données d'image (302),
- une position et/ou une distance d'une caméra acquérant les données d'image par rapport au document d'identification (200) et/ou par rapport à la partie du visage,
- un code alphanumérique, qui est reproduit dans les premières données d'image (301) et/ou les deuxièmes données d'image (302) et qui contient un instant ou un intervalle de temps.

4. Procédé selon l'une quelconque des revendications précédentes,
**caractérisé en ce que** le procédé comprend en outre :
- la génération de données de commande sur le serveur d'identification (101),
- l'envoi des données de commande du serveur d'identification (101) au terminal (103),
dans lequel les données de commande instruisent au terminal (103) d'acquérir les premières données d'image (301) et/ou les deuxièmes données d'image (302) avec des paramètres d'image déterminés,
dans lequel les paramètres d'image sont sélectionnés de préférence dans le groupe suivant :
- nombre d'images ;
- paramètres d'exposition ;
- fonction flash ;
- résolution d'image.

5. Procédé selon l'une quelconque des revendications précédentes,
**caractérisé en ce que** les premières données d'image (301) et/ou les deuxièmes données d'image (302) sont sélectionnées dans le groupe suivant :
- une image (301 -1, 301 -2, 301 -3) ;
- un film ;
- au moins deux images (301 -1, 301 -2, 301 -3) ou deux films, qui sont acquis séquentiellement à différents instants ;
- au moins deux images (301 -1, 301 -2, 301 -3) ou deux films, qui sont acquis avec des paramètres d'exposition et/ou des fonctions flash respectivement différents,
- au moins deux images (301 -1, 301 -2, 301 -3) ou films, qui reproduisent le document d'identification (200) ou la partie du visage depuis différentes perspectives et/ou distances.

6. Procédé selon l'une quelconque des revendications précédentes,
comprenant en outre :
- en réaction à l'identification, l'envoi d'un résultat d'identification du serveur d'identification (101) à l'autre serveur (102) en se référant à la demande d'identification reçue.

7. Procédé selon la revendication 6,
**caractérisé en ce que** le résultat d'identification et/ou la demande d'identification comprend au moins un des éléments suivants :
- un indicateur, qui indique un résultat d'identification positif ou un résultat d'identification négatif,
- un nom de l'utilisateur,
- un prénom et/ou un nom de famille de l'utilisateur,
- une date de naissance et/ou un âge de l'utilisateur,
- un indicateur, qui indique si l'âge de l'utilisateur est supérieur à une valeur seuil d'âge,
- un domicile de l'utilisateur,
- une adresse de l'utilisateur,
- un code postal du domicile de l'utilisateur,
- des données d'identification anonymisées de l'utilisateur,
- une classification de données d'identification de l'utilisateur par rapport à une classification de référence,
- un mot de passe de l'utilisateur.

8. Procédé selon l'une quelconque des revendications 6 ou 7,
**caractérisé en ce que** l'identification de l'utilisateur comprend en outre :
- la comparaison des données d'identification (201) déterminées avec la demande d'identification.

9. Procédé selon l'une quelconque des revendications précédentes,
**caractérisé en ce que** l'identification comprend en outre au moins une des étapes suivantes :
- vérification de caractéristiques d'intégrité du document d'identification (200) à partir des premières données d'image (301),
dans lequel les caractéristiques d'intégrité contiennent des sommes de contrôle et/ou des filigranes et/ou des reproductions d'hologramme et/ou des données biométriques,
- vérification de métadonnées, qui sont reçues avec les premières données d'image (301) et/ou avec les deuxièmes données d'image (302),
dans lequel les métadonnées comprennent un instant d'enregistrement des premières données d'image (301) et/ou un instant d'enregistrement des deuxièmes données d'image (302) et/ou une identification du terminal (103) et/ou une position d'enregistrement des premières données d'image (301) et/ou une position d'enregistrement des deuxièmes données d'image (302).

10. Procédé selon l'une quelconque des revendications précédentes,
**caractérisé en ce que** le procédé comprend :
- l'acquisition des premières données d'image (301) au moyen d'une caméra,
- l'acquisition des deuxièmes données d'image (302) au moyen de la caméra,
- l'envoi des premières données d'image (301) et des deuxièmes données d'image (302) du terminal (103) de l'utilisateur au serveur d'identification (101) pour l'identification de l'utilisateur.

11. Système d'identification d'un utilisateur,
**caractérisé en ce que** le système comprend :
- un terminal (103) d'un utilisateur,
- un serveur d'identification (101), dans lequel le serveur d'identification (101) comprend :
- une interface de communication (101a), dans lequel l'interface de communication (101 a) est aménagée pour recevoir des premières données d'image (301) du terminal (103) et pour recevoir des deuxièmes données d'image (302) du terminal (103),
dans lequel les premières données d'image (301) reproduisent un document d'identification (200) avec une photographie (202) de l'utilisateur,
dans lequel les deuxièmes données d'image (302) reproduisent une partie du visage de l'utilisateur,
- un processeur (101b), qui est aménagé pour identifier l'utilisateur,
dans lequel l'identification comprend :
- la comparaison des premières données d'image (301) avec les deuxièmes données d'image (302) pour déterminer une similitude de la photographie (202) de l'utilisateur à partir des premières données d'image (301) avec la partie du visage de l'utilisateur à partir des deuxièmes données d'image (302),
- la détermination de données d'identification (201) de l'utilisateur à partir des premières données d'image (301) à l'aide du document d'identification (200), dans lequel le système comprend en outre
- un autre serveur (102), qui comprend :
- un processeur (102b), qui est aménagé pour contrôler si une identification de l'utilisateur est nécessaire, dans lequel la vérification a lieu sur la base d'une liaison entre l'autre serveur (102) et le terminal (103) de l'utilisateur,
- une interface de communication (102a), qui est aménagée pour envoyer en fonction du contrôle, une demande d'identification au serveur d'identification (101) et pour recevoir un résultat d'identification du serveur d'identification (101),
dans lequel le serveur d'identification (101) est aménagé pour envoyer en réaction à la réception de la demande d'identification, une phase clé à l'autre serveur (102),
dans lequel l'autre serveur (102) est aménagé pour envoyer en tant que réaction à la phrase clé reçue, la phrase clé à un autre terminal (104) de l'utilisateur ou au terminal (103),
dans lequel le terminal (103) est aménagé pour établir une liaison avec le serveur d'identification (101) en utilisant la phrase clé.

12. Système selon la revendication 11,
**caractérisé en ce que** le système est aménagé pour réaliser un procédé selon l'une quelconque des revendications 1 - 10.
